# EUROPÄISCHE PATENTSCHRIFT

(11) **EP 0 776 291 B1**
(45) Veröffentlichungstag und Bekanntmachung des Hinweises auf die Patenterteilung: **15.04.1998**
(21) Anmeldenummer: 95931187.9
(22) Anmeldetag: 22.08.1995
(51) Int. Cl.: B61D 47/00, B65G 63/02

(54) **VERFAHREN UND VORRICHTUNG ZUM UMSCHLAGEN VON LADUNG**
PROCESS AND DEVICE FOR TRANSFERRING FREIGHT
PROCEDE ET DISPOSITIF DE TRANSBORDEMENT DE CHARGE

(30) Priorität: 22.08.1994 DE 4429710
(43) Veröffentlichungstag der Anmeldung: 04.06.1997
(73) Patentinhaber: Faller + Merk GbR, 84061 Ergoldsbach (DE)
(72) Erfinder: Faller, Alexander, jun., 84061 Ergoldsbach (DE)
(74) Vertreter: Patentanwälte Dr. Solf & Zapf
(86) Internationale Anmeldenummer: EP9503339
(87) Internationale Veröffentlichungsnummer: WO9605994

(56) Entgegenhaltungen:
- CH-A- 629 446
- US-A- 3 904 022
- US-A- 4 049 135

## Beschreibung

Die Erfindung betrifft ein Verfahren und eine Vorrichtung zum Umschlagen von Ladung.

Umschlagen von Ladung bedeutet Be- und Entladen von Ladung zwischen Schiene und Schiene oder Schiene und Straße oder Schiene und Schiff.

Die internationale politische und wirtschaftliche Verflechtung verursacht ein ständig zunehmendes Transportaufkommen, das aus Gründen des Umweltschutzes in gesteigertem Maße auf den Schienenverkehr bzw. auf den kombinierten Verkehr Straße/Schiene verlagert werden müßte. Die politisch an den Schienenverkehr gestellten Forderungen übersteigen die tatsächlichen Möglichkeiten bei weitem, da es Probleme hinsichtlich der Trassenverfügbarkeit und vor allem im Bereich des Umschlags gibt. So konnten wegen langwieriger planungsrechtlicher Verfahren in den vergangenen Jahren kaum neue, größere Umschlagstationen erstellt werden, die dringend benötigt werden.

Vor diesem Hintergrund wurde von Krupp die sogenannte Krupp-Schnellumschlaganlage entwickelt, die neben einem Be- und Entladegleis angeordnet ist. Hierbei wird ein Güterzug beim langsamen Vorbeifahren bzw. Vorbeirollen an der Schnellumschlaganlage automatisch durch Umschlaggeräte be- und entladen, die beim Entladen die einzelnen Ladungseinheiten des Güterzugs anheben und auf einem parallel zum Gleis verlaufenden Längsförderer absetzen. Die Ladungen werden dann auf dem Längsförderer zu einem Querförderer transportiert, der die Ladungen wiederum seitlich vom Gleis weg in ein Hochregallager befördert, wo die Ladungen abgelegt, sortiert und wieder dem Umschlaggerät zum Be- und Entladen eines Zuges bzw. der Ent- und Beladung von LKW's zugeführt wird.

Die wesentliche Grundidee der Krupp-Schnellumschlaganlage liegt darin, daß das Ent- und Beladen buchstäblich "im Vorbeifahren" erfolgt: Während sich der Zug langsam durch die Umschlaganlage bewegt, werden zunächst in einer Vorhalle Lage und Identität der Ladeeinheiten elektronisch mittels Sensoren überprüft und Tragwagen für den Umschlag vorbereitet. In einer Haupthalle fassen mitlaufende Umschlaggeräte die abzuladenden Einheiten wie Container, Wechselbehälter und Sattelanhänger, heben sie vom Transportwagen und setzen sie auf das Transportsystem aus Längsförderer und Querförderer.

Vorteilhaft an dieser Anlage ist, daß der Umschlag schnell erfolgt, ein Mischbetrieb von Güterlinienzügen und Güterdirektzügen möglich ist und die gesamte Anlage zu den herkömmlichen Transporteinheiten, wie Container, Wechselbehälter und Sattelanhänger kompatibel ist. Zudem wird eine Sortieranlage auf einer relativ kleinen Grundfläche geschaffen, die ein flexibles Umschlagen zwischen nacheinander einlaufenden Güterzügen und von und auf Lastwagen ermöglicht.

In der Zeitschrift "Cargo System", Juli 1994 auf Seite 55 ff. ist unter dem Titel "Waiting on the COMMUTOR line" ein Artikel veröffentlicht, der über das Forschungsprogramm der französischen Eisenbahngesellschaft SNCF berichtet, mit dem eine Umschlaganlage mit hohem Durchsatz und geringem Platzbedarf entwickelt werden soll. Das geplante System umfaßt 30 bis 36 Kräne, die entlang der Schienen angeordnet sind, d. h. ein Kran pro Waggonlänge. Die Kräne selbst werden nicht bewegt, sondern Trolleys werden senkrecht zu sogenannten Blockzügen bewegt, während in Längsrichtung sogenannte Shuttle-Züge als Fördereinrichtung zwischen den Blockzügen dienen.

Die einzelnen Ladungen werden mittels eines Gegengewichts und starken Motoren angehoben, um einen schnellen Ladungsumschlag zu erreichen.

Nachteilig an dem geplanten COMMUTOR und der Krupp-Schnellumschlaganlage ist, außer daß sie einen enormen technischen Aufwand erfordern, daß sie Ladungen von den Zugwaggons hochheben und so spezielle Lösungen für das Vorbeiführen der Ladung an den Oberleitungen erfordern. Dies kann durch abschnittsweises seitliches Wegschwenken der einzelnen Oberleitungsbereiche geschehen, das aber nur mit einem erheblichen Aufwand durchgeführt werden kann.

"Warum nicht mal horizontal - der Daimler-Benz-Kombi-Lifter" in DVZ Nr. 78/3. Juli 1994, Seite 5, ist eine Entwicklung von Daimler-Benz beschrieben, die ein einfaches Umschlagen von Straße auf Schiene und umgekehrt ermöglichen soll. Die technischen Voraussetzungen sind am Umschlagort sehr einfach zu realisieren, denn es wird nur eine in den Straßenbelag eingelassene Schienenspur an einem Gleisanschluß benötigt. Der LKW transportiert seine Fracht in einem genormten Ladegefäß - einer Wechselbrücke mit ausklappbaren Stützbeinen - heran. Er fährt über den Schienenstrang, senkt bei ausgefahrenen Stützbeinen seinen Unterbau ab und stellt die Wechselbrücke samt Ladung über dem Gleis wie auf Stelzen ab. Dann fährt das Straßenfahrzeug wieder aus der Gleisspur heraus.

Nun rollen - rückwärts fahrend - die aneinander gekoppelten Zugwagons plus Lokomotive heran. Der Zugverband unterfährt die abgestellten Wechselbrücken bis zu einem definierten Übernahmepunkt. Dann wird die Tragkonstruktion der Waggons durch ein in die Waggons eingebautes Liftsystem angehoben, so daß die Stützbeine ihren Bodenkontakt verlieren und mechanisch eingezogen werden können. Der beladene Zugverband kann dann nach dem Absenken der Einheiten das Gleis verlassen.

Wichtige Vorteile dieses Systems sind:
- im Gegensatz zu anderen Umschlagtechniken wird dieses System im wesentlichen mit bekannten, in der Praxis bewährten Komponenten, realisiert;
- aufwendige Portalkräne werden überflüssig, und es kommt nicht mehr zu Warteschlangen und überlasteten Terminals;
- auch dezentrale Standorte, weit ab vom nächsten Güterterminal, können durch Kombi-Lifter am kombinierten Ladungsverkehr teilnehmen.

Die mögliche Dezentralisierung ist ein wesentlicher Vorteil gegenüber den oben diskutierten Schnellumschlaganlagen mit Kränen zum Querverladen, da hierbei auch kleine Industriestandorte einfach am Schienentransportverkehr teilnehmen können. Jedoch ist nachteilig an dem Kombi-Lifter, daß neuartig genormte Ladegefäße, d. h. eine neue Wechselbrücke mit ausklappbaren Stützbeinen eingeführt werden muß, ohne die eine Teilnahme am kombinierten Verkehr nicht möglich ist. Zudem ist ein Umschlagen von Schiene auf Schiene bzw. ein Umsteigen unterwegs nicht möglich, oder es müßte ein zusätzliches weiteres Umschlagsystem eingesetzt werden. Probleme dürfte auch das positionsgenaue Abstellen und Aufnehmen der Wechselbehälter mit den Hubschwingen der Tragwagen bereiten. Ferner muß ein geeignetes System gefunden werden, mit dem die Reihenfolge der einzufahrenden LKW's geregelt wird, oder man müßte einen eigenen Umschlagdienst mit eigenen LKW's vorsehen, der aber wiederum einen zusätzlichen Umschlagvorgang von LKW auf LKW erfordert.

Zudem ist es bei diesem System notwendig, daß der Zugverband geschoben wird, da ein Unterfahren der abgestellten Wechselbehälter mit einer Lok nicht möglich ist. Auch können Ladungen aus der Mitte eines Zugverbandes mit dem Kombi-Lifter nicht ohne zusätzlichem Umschlaggerät be- und entladen werden. Ein Be- und Entladen gleichzeitig an einem einzigen Gleis ist mit dem Kombi-Lifter nicht möglich, da an einem Gleis entweder nur Wechselbehälter abgestellt oder aufgenommen werden können.

Ein weiteres Umladesystem für den kombinierten Verkehr ist in der DE 36 07 307 A1 offenbart, bei der ein Drehrahmen zur Aufnahme eines Behälters auf einem Schienenfahrzeug vorgesehen ist, der an einem Ende seitlich schwenkbar an dem Schienenfahrzeug angelenkt ist, so daß bei ausgeschwenktem Drehrahmen ein LKW mit seinem rückseitigen Ende an eine Stirnseite der Drehrahmens heranfahren kann und ein Transportbehälter in Längsrichtung auf den LKW oder vom LKW verschoben wird. Hierbei sind zusätzliche Rollen an der Unterseite des Transportbehälters vorzusehen, um ihn in Längsrichtung verschieben zu können. Diese Art von Umladesystem ist mit einem beträchtlichen Aufwand verbunden und bereitet Abstützprobleme, wenn beim ausgeschwenkten Rahmen eine schwere Last hierüber transportiert wird.

In der DE 32 39 622 A1 ist eine Einrichtung zum Verschieben und Absetzen von Lasten, insbesondere von Containern von einem Tragfahrzeug mit einer Ladevorrichtung aus einem mit dem Fahrzeugrahmen verbundenen ausfahrbaren Stützrahmen aus mehreren ineinandergeifenden Profilen beschrieben. Die Ladevorrichtung weist zwei ineinandergreifende Profile auf, von denen eines mit dem Fahrzeugrahmen verbunden ist und das andere in Profillängsrichtung ausschiebbar ist. Die Form der Profile ist so gewählt, daß zwischen den beiden Profilen ein offener Profilraum verbleibt, der nach oben durch einen Spalt zwischen den beiden Profilen geöffnet ist, so daß er von Stützelementen durchgriffen werden kann, die die Last bzw. den Container tragen.

Mit dieser Vorrichtung sollen auch schwere Lasten einwandfrei verschoben werden können, was durch einen langen abgestützen Führungsweg der Schienen gewährleistet ist. Diese Vorrichtung dient nicht zum Umschlagen von Ladungen, sondern nur zum Absetzen von Containern, um das Fahrzeug unabhängig vom Container benutzen zu können, wenn dieser mit Stützfüßen abgestützt an dem Aufstellort verbleibt. Für ein reibungsloses Funktionieren der Einrichtung zum Verschieben und Absetzen von Lasten ist es notwendig, daß mit Stützen der Fahrzeugrahmen stabil gehalten wird.

Weiterhin sind Überladebäume zum Querverladen von Transportbehältern von einem Transportfahrzeug auf ein seitlich daneben abgestelltes Transportfahrzeug aus der DE 42 44 156 A1 bekannt.

Die Überladebäume überbrücken und fixieren den Abstand der Ladeebenen voneinander, gleichen deren Höhenunterschied zueinander aus und tragen an ihrer Oberseite Gleitbahnen, über die die zu verladenen Transportbehälter mit Horizontalfördermitteln von der Ladeebene des einen Fahrzeugs auf die Ladeebene des anderen Fahrzeugs geschoben oder gezogen werden.

Ferner ist in der DE 39 17 470 A1 vorgeschlagen worden, einen Containerbahnhof derart auszubilden, daß die Container seitlich von den Zugwaggons abgeladen und mittels Rollbahnen und Unterführungen zwischen den einzelnen Gleisen hin- und hergeschoben werden, wobei die Containerwege ähnlich wie herkömmliche Fußgängerunterführungen an den Gleisen ausgerichtet sind. Durch das Querverladen ist es möglich, das Umschlagen auch im Schienenbereich mit Oberleitung auszuführen, wo ein Entladen der Container mittels eines üblichen Containerkrans nicht möglich ist. Jedoch werden in der gesamten Druckschrift keine näheren Angaben gemacht, wie die Container seitlich von den Schienenfahrzeugen runtergeschoben werden.

In der DE 33 13 019 A1 ist ein Umschlagverfahren für im Schienen- und Straßenverkehr zu transportierende Güter offenbart, bei dem speziell mit an der Unterseite der Container vorgesehenen Profilen die Container auf Rollenführungen quer verladen werden. Durch die spezielle Ausbildung der Container wird die Universalität der Container aufgehoben. Zudem können mit diesem Verfahren keine Wechselbrücken oder Sattelaufleger verladen werden.

Ein weiteres Verfahren zum gleichzeitigen und rangierfreien Umschlag zwischen Schiene und Schiene sowie Straße und Schiene ist in der DE 31 36 687 A1 beschrieben. Hierzu sind horizontal quer zur Gerätelängsachse ausfahrbare und vertikal anhebbare, die Container untergreifende, Übergabevorrichtungen an den Umschlaggeräten vorgesehen. Dieses Verfahren und die dabei verwendete Vorrichtung ist nur für ISO-Container geeignet, da nur an ihnen die Umschlaggeräte angreifen können. Ein Verladen von herkömmlichen Wechselbehältern oder Sattelanhängern ist mit diesem Verfahren nicht möglich.

Aus der DE 43 01 019 A1 ist ein Ver- bzw. Entladesystem zum Ver- bzw. Entladen von großvolumigem Frachtgut bekannt. Hierzu sind sogenannte Verladepaletten vorgesehen, auf denen das zu verladende Gut bereitgestellt wird und durch eine Querverschiebung quer zur Längserstreckung der Verladepaletten auf ein Schienenfahrzeug geschoben und dort verriegelt wird. Die jeweilige Verladepalette verbleibt während des Transports am jeweiligen Schienenfahrzeug. Hierdurch soll ein im Vergleich zu bisher bekannten Systemen im wesentlichen schnelleres Ver- bzw. Entladen erzielt werden.

Aus der DE 36 16 484 A1 ist eine ähnliche Vorrichtung zum Be- und Entladen von Kraftfahrzeugen und Lasten auf ein und von einem Schienenfahrzeug mit einer Vielzahl von hintereinander angeordneten Stellplätzen bekannt. Jedem Stellplatz ist eine von einer zentralen Steuereinheit gesteuerte getrennte Fördervorrichtung und mindestens ein Halteplatz auf einem Bahnsteig des Bahnhofs zugeordnet, die das auf dem Halteplatz stehende Kraftfahrzeug ohne die Last nach genauem Halten des Schienenfahrzeugs an vorbestimmter Stelle vor dem Halteplatz auf den Stellplatz oder ein auf dem Stellplatz stehendes Kraftfahrzeug auf den Halteplatz befördert. Auch hierzu sind Verladepaletten vorgesehen, die vor Beginn der Förderung leicht angehoben und nach Beendigung des Vorgangs wieder abgesenkt werden. An den Stellplätzen des Schienenfahrzeugs sind Verankerungsmittel vorgesehen, mit denen die jeweiligen Paletten festgelegt werden können.

In der DE-AS 24 40 682 ist ein Umschlagsystem für Container und Paletten mit Bereitstellungsrampen beschrieben, welchen Be- und Entladevorrichtungen für Straßenfahrzeuge sowie Gleise für Containerzüge zugeordnet sind, und welche Rollengänge zum Bewegen der Container aufweisen. Das Umschlagsystem bildet eine Bahnhofsanlage mit Gleisen und dazu parallel verlaufend und angrenzend angeordneten Rampen zum Zwischenlagern von Behältern. Die Rampen sind mit Rolleneinheiten versehen, auf welchen die Container und Paletten in Querrichtung zum Gleis bzw. zur Rampe gefördert werden können. Ferner sind angrenzend zu den Rampen Längsförderanlagen vorgesehen, auf denen das zu befördernde Gut parallel zu den Gleisen befördert werden kann. Auch die Waggons sind mit entsprechenden Rolleneinheiten vesehen, welche entsprechend den anderen Rolleneinheiten auf den Rampen angeordnet sind und der Querförderung der Behälter beim Ein- und Aussteigen dienen. Für einen störungsfreien Ablauf der Behälterförderung in Längs- und Querrichtung auf den in Modulabständen montierten Rolleneinheiten werden spezielle Behälter vorgesehen, die auf ihrer Unterseite V-förmige in Modulabständen angeordnete Laufrillen aufweisen, so daß eine innerhalb einer vorbestimmten Toleranz formschlüssige Führung erreicht wird. An den Rampenaußenseiten erfolgt das Umschlagen auf Lastkraftwagen mittels Hebezeug-Gehängen, mit welchen die Behälter von den Rampen gehoben und auf die Ladefläche der Lastkraftwagen verlagert werden.

In der DE-OS 2 231 442 wird eine Bahnhofsanlage für den Eisenbahngüterverkehr beschrieben, an der das Gut mittels Containern be- und entladen wird, um so ein Rangieren einzelner Güterwaggons auf ausgedehnten Gleisanlagen zu vermeiden. Hierzu werden fahrbare, gegebenenfalls mit Antriebsaggregaten versehene Untersätze für die Behälter vorgesehen, auf denen sich die Behälter während ihres Aufenthaltes auf dem Bahnhof ständig befinden. Nach dem Ausrollen des Zuges im Bahnhof werden die Container auf die Untersätze verladen, wobei dies beispielsweise durch Anheben der Container und Unterfahren der Untersätze erfolgen kann. Die Untersätze können mit den Containern sowohl in Quer- als auch in Längsrichtung zu den Gleisen bewegt werden.

Eine weitere Vorrichtung zum Auf- und Abladen von Straßenfahrzeugen auf Eisenbahn-Güterwagen ist in der DE 36 44 411 A1 beschrieben. Hierbei werden Plattformen vorgesehen, unter denen Rollen angebracht sind, die in U-Schienen quer zur Güterwagenlängsachse rollen. Die U-Schienen haben Verlängerungen, die herunter geklappt werden und auf einer neben dem Güterwagen befindlichen Rampe aufliegen. Die Plattformen werden auf die Rampe gerollt. Nach Auffahren eines Lastkraftwagens werden die Plattformen wieder auf den Güterwagen zurückgezogen. Die Plattformen können in mehrere Plattformsegmente unterteilt sein, um den Platz auf den Güterwagen besser auszunutzen. Hierdurch soll die Ladezeit verkürzt werden und die Lastkraftwagen sollen, ohne Kurven fahren zu müssen, auf- und abgeladen werden können.

Ferner ist aus der DE-OS 1 756 373 ein Verfahren und eine Vorrichtung zum Umschlagen von Containern bekannt, bei dem die Container auf neben den Gleisen angeordneten höhenverstellbaren Rampen durch Querverschieben von einem Güterwagen abgeladen und durch entsprechendes Querverschieben in entgegengesetzte Richtung von einer Rampe auf den Güterwagen geladen werden. Die Container sind über Gleitschienen oder ähnliche Vorrichtungen verschiebbar, wobei die Rampen mittels eines Niveaureglers auf die Höhe des Güterwagens einstellbar sind.

Zusammenfassend wird festgestellt, daß die momentan entwickelten und geplanten Umschlaganlagen einen enormen technischen Aufwand erfordern und Ladungen von Zugwagons hochheben und so spezielle Lösungen für das Vorbeiführen an Oberleitungen erfordern. Zudem stellen solche Umschlaganlagen große Umschlagzentren dar, die keinen dezentralen Umschlagbetrieb erlauben.

Es sind auch andere Umschlagsysteme bekannt, die ein horizontales Umschlagen ermöglichen. Hierzu ist eine Vielzahl verschiedener Systeme vorgeschlagen worden, die z.T. spezielle Transportbehälter benötigen oder einen technisch aufwendigen Drehrahmen aufweisen, womit die Container seitlich von Schienenfahrzeugen weggeschwenkt werden. Die Transportbehälter weisen beispielsweise an ihrer Unterseite spezielle Laufrillen auf, die mit entsprechenden Rollengängen an der Umschlagstation zusammenwirken (DE-AS 24 40 682), um ein horizontales Querverschieben und eine Weiterbeförderung in der Umschlagstation zu ermöglichen.

Ferner sind aus der DE 43 01 019 A1, der DE 36 16 484 A1 bzw. der DE 36 44 411 A1 Verladepaletten bzw. Plattformen bekannt, auf denen das Gut im allgemeinen Kraftfahrzeuge oder Container zum Be- und Entladen eines Güterwagens durch Querverschieben auf oder von diesem geschoben werden. Hierdurch soll der Be- und Entladevorgang beschleunigt werden. Diese Verladepaletten bzw. Plattformen sind vor allem für den Transport von Kraftfahrzeugen vorgesehen, die nach dem Entladevorgang vom Güterwagen selbsttätig von den Verladepaletten bzw. Plattformen abfahren. Werden mit diesen Verladepaletten bzw. Plattformen Container oder dergleichen transportiert, so muß das Gut nach dem Entladen vom Güterwagon mit einer Hubeinrichtung abgehoben werden.

Der Erfindung liegt die Aufgabe zugrunde, ein Verfahren und eine Vorrichtung zum Umschlagen von Ladungen von Schiene auf Schiene sowie Schiene auf Straße oder Schiene auf Schiff oder umgekehrt zu schaffen, die einen einfachen Aufbau hat, behältnisunabhängig und unabhängig von Oberleitungen arbeitet und ein sehr schnelles Umschlagen ermöglicht.

Diese Aufgabe wird durch ein Verfahren nach Anspruch 1 und eine Vorrichtung nach Anspruch 6 gelöst. Vorteilhafte Ausgestaltungen der Erfindung sind in den Unteransprüchen angegeben.

Ein wesentlicher Aspekt der Erfindung ist, daß ein auf einem Schienenfahrzeug quer verschiebbar gelagerter Wechselboden als Ladungsvermittler verwendet wird. Dieser als Ladungsvermittler dienende Wechselboden wird erfindungsgemäß nicht nur zum Be- und Entladen eines Güterzuges verwendet, sondern auch zur Beförderung des Gutes in der Umschlagstation, wobei der Wechselboden parallel und quer zum Gleis verfahren werden kann, wobei die auf den verschiedenen Wechselböden befindliche Ladung sortiert wird. Durch die Verwendung eines Wechselbodens wird die Ladung von Schiene auf Schiene sowie Schiene auf Straße oder Schiene auf Schiff behältnisunabhängig umgeschlagen, da auf dem Wechselboden beliebige Transportbehälter, Paletten und dergleichen abgestellt werden können.

Durch die Aufteilung eines Schienenladungsträgers in einen Tragboden und Wechselboden können die Schienenfahrzeuge ständig auf Strecke sein, während die Wechselböden für das Aufnehmen bzw. Abgeben von Ladung an den Umschlagstationen bereitstehen bzw. vorgehalten werden. Durch das einfache Verschieben der Wechselböden hat man jederzeit Zugang auf einzelne Ladungen, wodurch auch ein Ent- und Beladen auf kleinen Umschlagstationen möglich ist. Insbesondere im Schienenverkehr hat die Querverladung durch Querverschieben den Vorteil, daß es keine Probleme mit Oberleitungen gibt. Zudem fordert das erfindungsgemäße Verfahren nur geringe Investitionen im Vergleich zu den derzeit geplanten Schnellumschlaganlagen. Das erfindungsgemäße Umschlagsystem kann schrittweise eingeführt und ausgebaut werden, wodurch die anfallenden Investitionen über einen längeren Zeitraum verteilt werden. Die Wechselböden können auch als Spezialbehälter für z. B. Schüttgüter, Gase oder Flüssigkeiten ausgebaut sein, wodurch es nicht mehr notwendig ist, ein vollständiges Spezialfahrzeug zu bauen.

Die erfindungsgemäße Ladungsvermittlung durch einen Wechselboden ermöglicht kurze Umladezeiten, weil zum Entladen eines Schienenfahrzeuges bzw. Transportfahrzeuges der Wechselboden mitsamt der Ladung nur zu einer Seite quer zur Fahrbahn abgeschoben und zum Beladen ein anderer Wechselboden lediglich von der anderen Seite aufgeschoben wird.

Die erfindungsgemäße Umschlagstation hat aufgrund des schnellen Querverladens eine außerordentlich hohe Umschlagleistung, da eine Vielzahl von Wechselböden gleichzeitig verschoben und unabhängig vom Transportfahrzeug sortiert werden kann. Im Zugverkehr bedeutet dies eine geringe Standzeit der Züge, die zudem sehr flexibel, d. h. an beliebigen Waggons im Güterzug be- und entladen werden können, so daß die Ladungsvermittlung mit einem Wechselboden die Einführung von Güterlinienzügen ermöglicht. Durch die kurzen Umschlagzeiten können auch Güterzüge über kurze Strecken wirtschaftlich eingesetzt werden, wodurch sie eine weitere Entlastung der Straße und damit der Umwelt ergibt.

Die Erfindung wird anhand der Zeichnungen im folgenden beispielhaft näher beschrieben. Es zeigen:
- Fig. 1a: perspektivisch ein Schienenfahrzeug mit einem erfindungsgemäßen Wechselboden;
- Fig. 1b: perspektivisch das Schienenfahrzeug gemäß Fig. 1 mit abgeschoben dargestelltem Wechselboden;
- Fig. 2: perspektivisch das Schienenfahrzeug gemäß Fig. 1a in einer Explosionsdarstellung mit Ladungsvermittler und Tragboden sowie den Schienenfahrwerken;
- Fig. 3: eine Draufsicht auf gekoppelte Schienenfahrzeuge mit je einem Wechselboden;
- Fig. 4: eine Draufsicht auf den Bereich eines mittleren Fahrwerks in Fig. 3;
- Fig. 5: eine perspektivische schematische Darstellung einer Umschlagstation mit eingefahrenen Schienenfahrzeugen;
- Fig. 6: perspektivisch und schematisch die Einrichtungen der Umschlagstation zum Längsverschieben der Wechselböden;
- Fig. 7: schematisch eine Umschlagstation mit einer Beladestrecke und einer Entladestrecke, daran eingefahrenen Schienenfahrzeugen und teilweise geschlossenen Gleisbrücken;
- Fig. 8: einen Schnitt quer zur Fahrtrichtung durch die Umschlagstation aus Fig. 7 im Bereich der Beladestrecke und einer Sortierstrecke;
- Fig. 9a bis 9o: schematisch eine Umschlagstation im Schnitt quer zur Fahrtrichtung mit einer Beladestrecke und einer Entladestrecke beim Ein- und Ausfahren eines Schienenfahrzeuges;
- Fig. 10a und 10b: perspektivisch ein Umschlaggerät mit angehobenem bzw. abgesenktem Wechselboden;
- Fig. 11: perspektivisch das Umschlaggerät aus Fig. 10a in Explosionsdarstellung;
- Fig. 12: eine Frontansicht des Umschlaggeräts aus Fig. 10a beim Aufnehmen eines Wechselbehälters bzw. beim Anfahren des Wechselbehälters an eine Sortierstrecke;
- Fig. 13a bis 13f: eine schematische Darstellung des Einsortierens von Wechselböden in eine Umschlagstation;
- Fig. 14a bis 14y: eine schematische Darstellung des Entlade-, Sortier- und Beladevorgangs an einer Umschlagstation für Wechselböden.

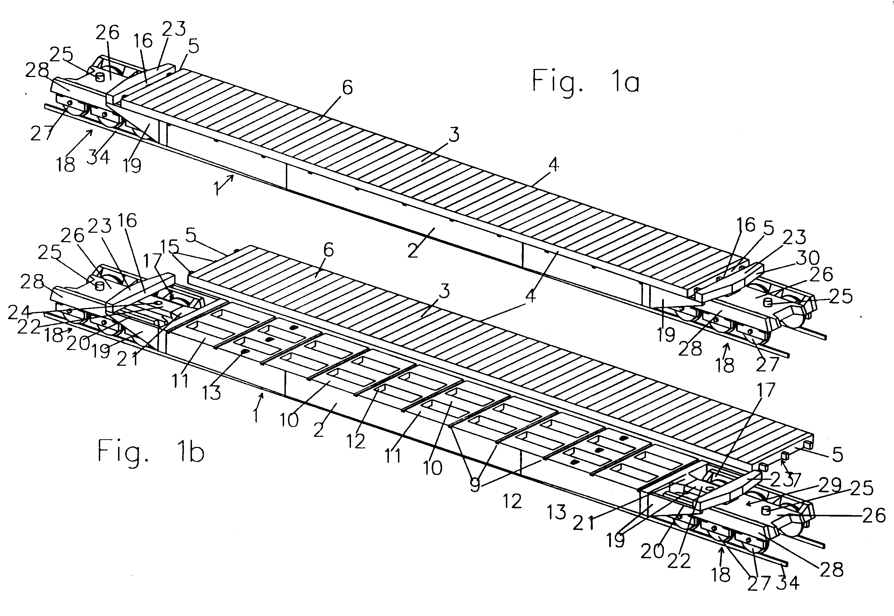

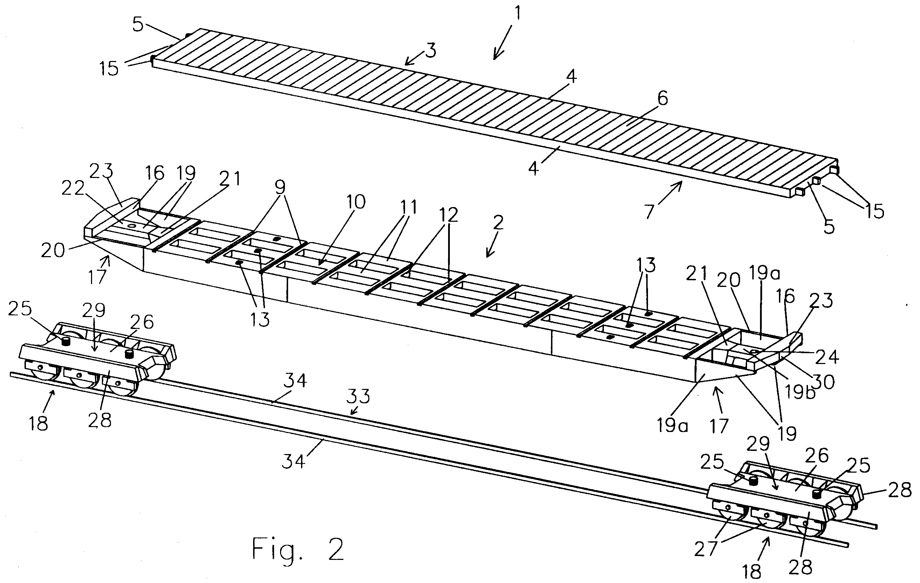

Die Erfindung liegt im wesentlichen im Aufteilen eines Ladungsträgers für ein Schienenfahrzeug 1 in einen Tragboden 2 und einen darauf querverschiebbar angeordneten als Ladungsvermittler dienenden Wechselboden 3 (Fig. 1a, 1b und 2).

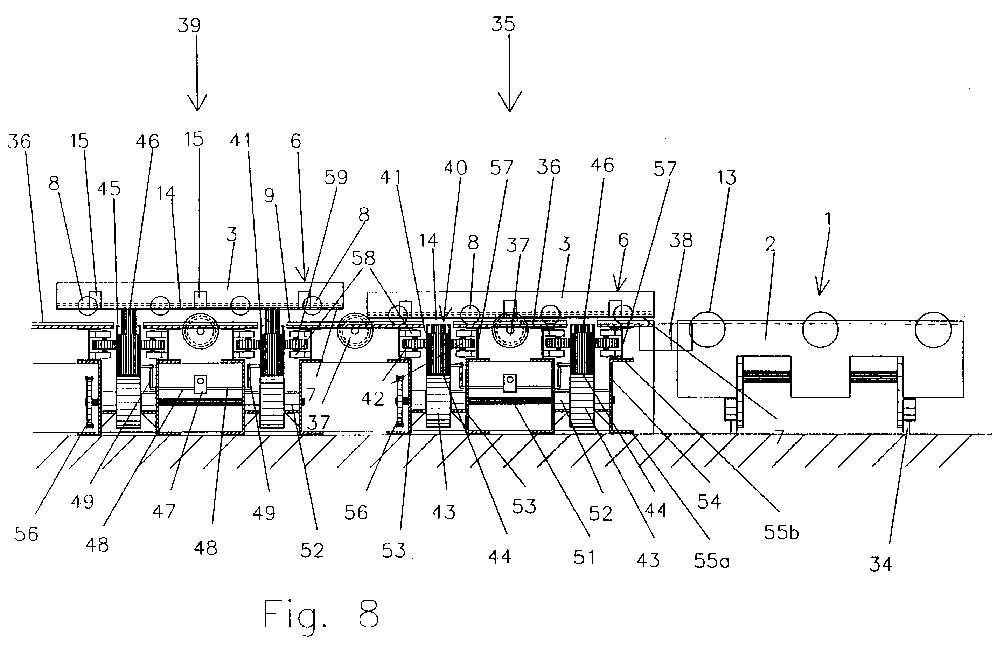

Der Wechselboden 3 ist eine im wesentlichen rechteckige Platte mit zwei langen Seitenkanten 4 und zwei kurzen Stirnkanten 5. Seine Oberseite bildet ein ebenflächiges Ladedeck 6, das zur Lagerung unterschiedlichster Behältnisse oder Ladungen geeignet ist. An der Unterseite 7 des Wechselbodens sind in mehreren quer zu den Seitenkanten 4 verlaufenden Reihen Rollen 8 (Fig. 8) angeordnet, deren Achsen parallel zu den Seitenkanten 4 bzw. parallel zur Fahrtrichtung des Schienenfahrzeugs 1 verlaufen. Der Tragboden 2 ist eine stabile Stahlkontstruktion aus drei Längsstreben 11 und mehreren Querstreben 12. An den Querstreben 12 sind an der Oberseite 10 des Tragbodens 2 rillenförmige Führungsbahnen 9 vorgesehen, die quer zur Längsrichtung des Tragbodens 3 bzw. quer zur Fahrtrichtung des Schienenfahrzeugs 1 verlaufen. Die Rollen 8 der Wechselböden 3 greifen in die rillenförmige Führungsbahnen 9 ein, so daß der Wechselboden 3 auf dem Tragboden 2 in Querrichtung verschiebbar ist.

An der Oberseite 10 des Tragbodens 2 sind ferner Zahnräder 13 etwas überstehend in zwei oder mehreren Querreihen angeordnet, wobei vorzugsweise jede Längsstrebe 11 des Tragbodens 2 ein Zahnrad 13 pro Querreihe aufweist. Die Zahnräder 13 stehen mit an der Unterseite 7 der Wechselböden 3 vorgesehenen Zahnstangen 14 in Eingriff, die quer zu den Seitenkanten 4 der Wechselböden 3 bzw. quer zur Fahrtrichtung des Schienenfahrzeugs 1 angeordnet sind. Die Zahnräder 13 sind mit ihren Achsen parallel zur Fahrtrichtung des Schienenfahrzeugs 1 angeordnet und werden von einer Antriebseinheit (nicht dargestellt) angetrieben, um die Wechselböden 3 in Querrichtung zu verschieben.

An den Stirnkanten 5 der Wechselböden 3 stehen jeweils drei Verriegelungszapfen 15 vor, die von entsprechenden Greif- und Fixierelementen 16 am Tragboden 2 festgehalten werden, so daß während einer Fahrt der Schienenfahrzeuge 1 die Wechselböden 3 fest mit den Tragböden 2 verbunden sind und größeren Querkräften z. B. in Kurven widerstehen können. Zum Querverschieben der Wechselböden 3 werden die Verriegelungszapfen 15 durch die Greif- und Fixierelemente freigegeben, so daß die Wechselböden 3 in Querrichtung nur durch die Zahnräder 13 fixiert sind und durch diese seitlich verschoben werden können.

An den Enden der Tragböden 2 sind Aufhängungen 17 vorgesehen, mit denen die Tragböden 2 an Schienenfahrwerken 18 eingehängt werden.

Die Aufhängungen bzw. Aufhängeeinrichtungen 17 umfassen jeweils drei Tragarme 19, die in gerader Verlängerung zu den Längsstreben 11 angeordnet sind. Die seitlich außenliegenden Tragarme 19a sind dreiecksförmig und haben eine in der Ebene der Oberseite 10 des Tragbodens liegende Oberkante 20. Der innenliegende Tragarm 19b besteht aus einem kurzen Ansatzstück 21, das an die mittlere Längsstrebe 11 befestigt ist, und einer sich daran erstreckenden Tragplatte 22, die etwa auf Höhe der Oberkante 20 angeordnet ist. Die Tragarme 19 sind an ihren, den Streben 11, 12 gegenüberliegenden Enden mit einem Querbalken 23 verbunden, der oben auf den Tragarmen 19 aufliegt und über die Ebene der Oberseite 10 des Tragbodens 2 übersteht. An den Querbalken 23 sind die Greif- und Fixierelemente 16 zum Erfassen der Verriegelungszapfen 15 des Wechselbodens 3 angebracht.

Die Tragplatte 22 ist an der Quermitte des Tragbodens 2 mit einem Loch 24 versehen, mit dem der Tragboden 2 an einem Drehzapfen 25 eines Schienenfahrwerks 18 drehbar eingehängt wird. Das dreiachsige Schienenfahrwerk 18 umfaßt einen Grundkörper 26, der sich zwischen Schienenrädern 27 erstreckt und auf den jeweils zwei Drehzapfen 25 quermittig in Fahrtrichtung voneinander beabstandet angeordnet sind. Seitlich sind an dem Schienenfahrwerk 18 die Schienenräder 27 umgreifende Leisten 28 vorgesehen, die etwas über die Oberseite 29 des Grundkörpers 26 vorstehen, so daß sie den Querbalken 23 von unten gegen ein Verkippen stützen. Das Loch 24 bzw. die Aufnahme für den Drehzapfen 25 der Schienenfahrwerke 18 befindet sich in einem hydraulisch gefederten Schlitten, der während der Fahrt und des Anfahrens die Funktion eines Puffers übernimmt. Während des Aufenthaltes in Bahnhöfen bzw. Umschlagstationen wird die hydraulische Federung entlastet, so daß durch nacheinander eingreifende Verriegelungen eventuell auftretende Längendifferenzen in Folge von Temperaturschwankungen ausgeglichen werden.

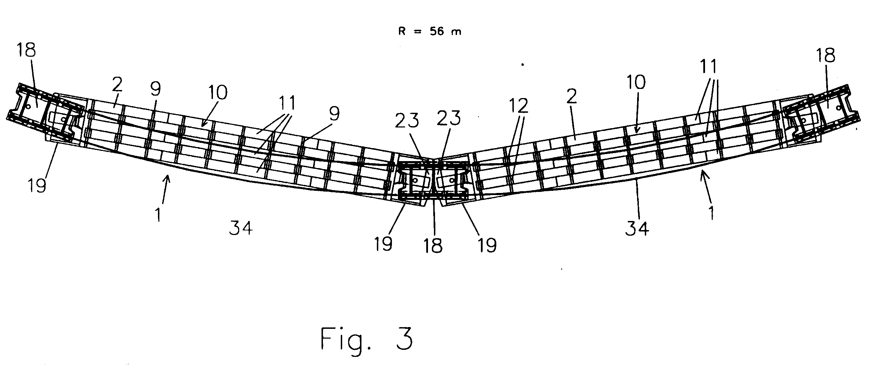

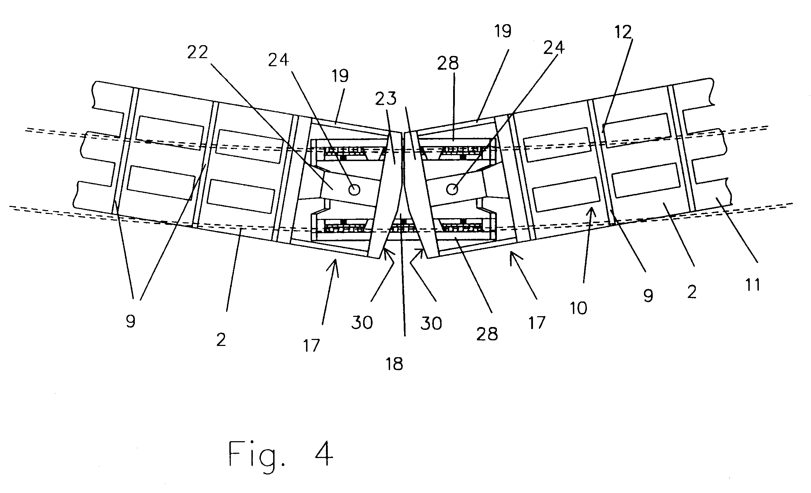

Zwei Tragböden 2 bilden mit drei Schienenfahrwerken 18 zwei "Güterwaggons", wobei für jeden hinzukommenden Tragboden 2 nur ein Schienenfahrwerk 18 ergänzt werden muß (Fig. 3, 4). Hierzu werden an den Schienenfahrwerken 18 jeweils zwei Tragböden 2 mit ihren Löchern 24 an den Drehzapfen 25 eingehängt, so daß sich die Querbalken 23 der beiden Tragböden 2 gegenüberliegen. Die nach außen von den Tragböden 2 weg zeigenden Seitenflächen 30 der Querbalken 23 sind in der Draufsicht in seitlicher Richtung abgeschrägt, so daß sich die Tragböden 2 in einer Kurvenfahrt nicht gegenseitig stören (Fig. 3, 4) und der Abstand zwischen den Tragböden 2 möglichst kurz gehalten werden kann.

Das Umschlagen von und auf das Schienenfahrzeug erfolgt entweder an einer Umschlagstation 31 oder mittels eines Umschlaggeräts 32, das weiter unten näher beschrieben wird.

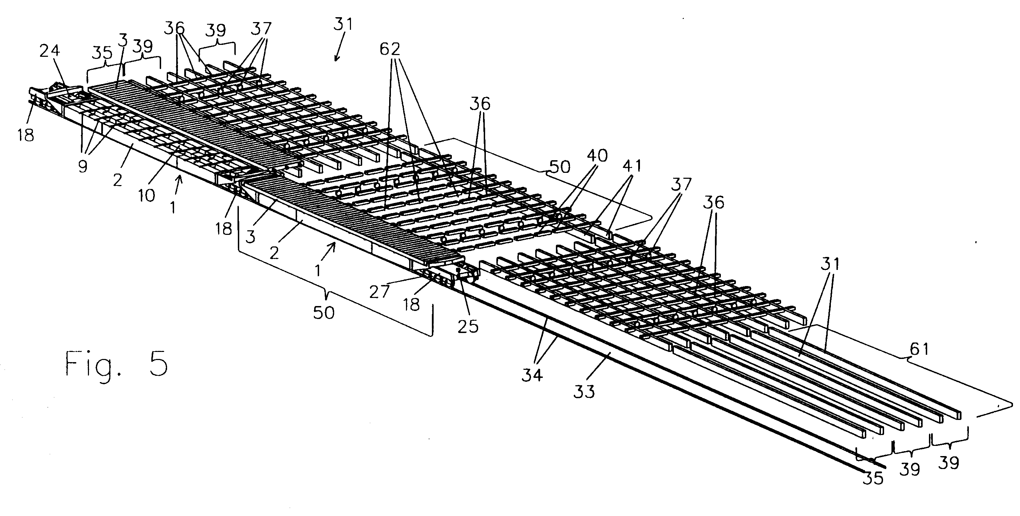

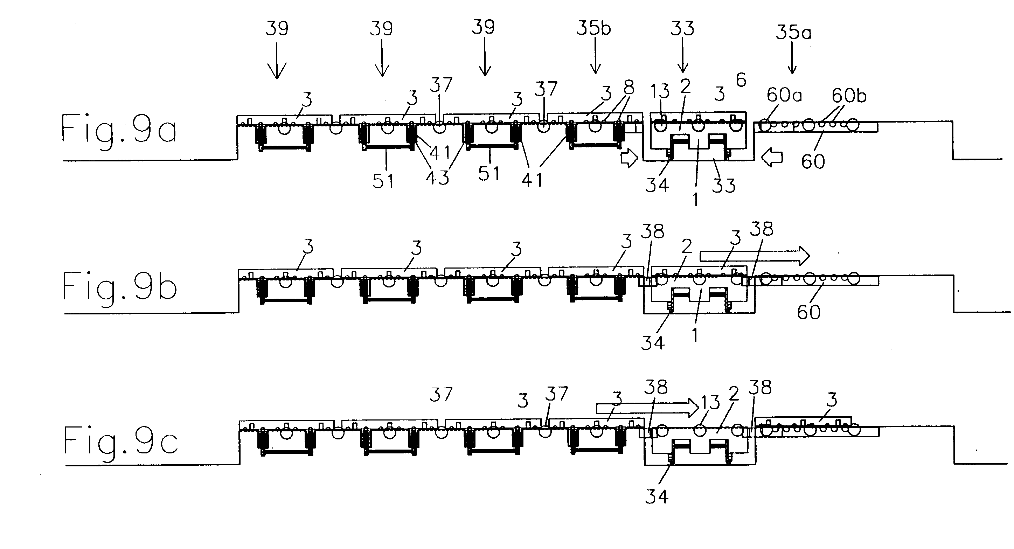

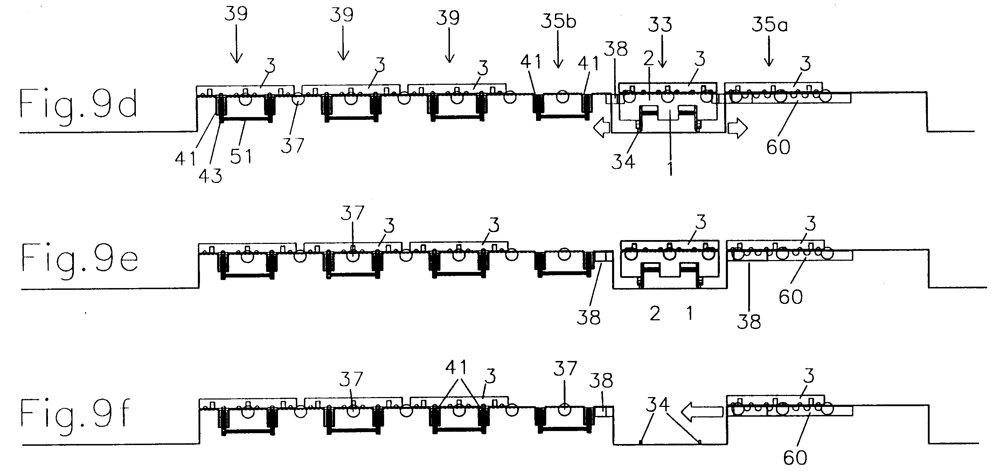

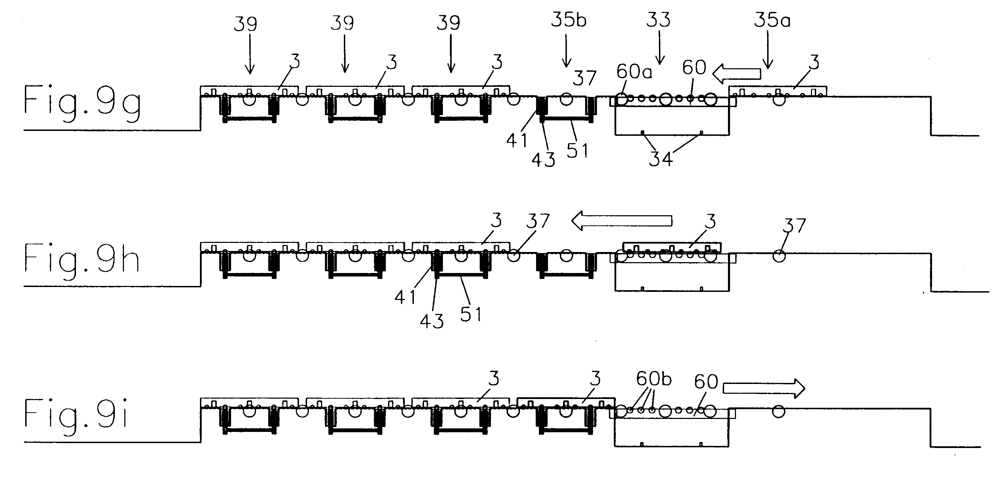

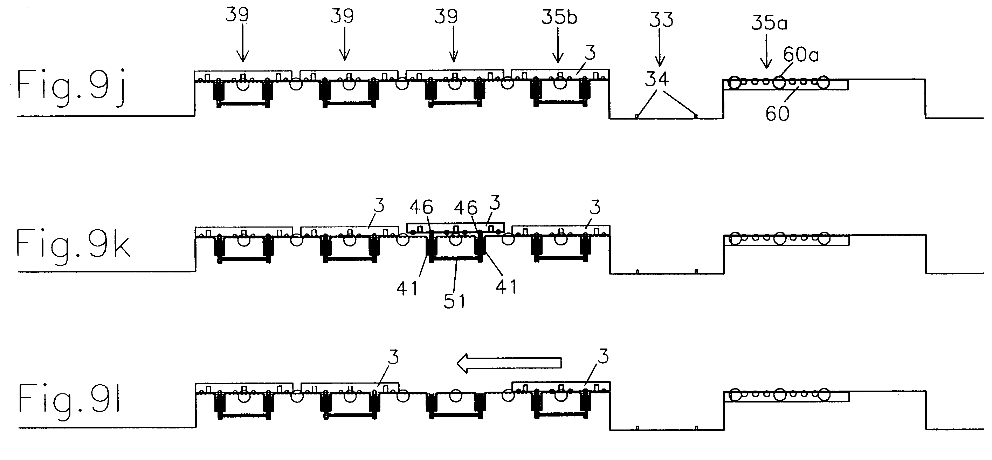

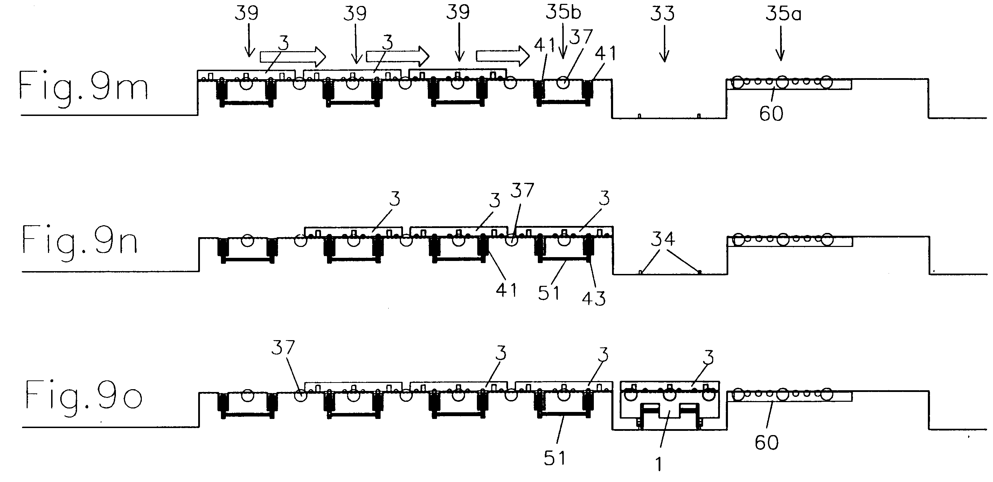

Die Umschlagstation 31 (Fig. 5 bis 9) umfaßt ein Gleis 33 mit Schienen 34, auf denen Schienenfahrzeuge 1 ein- und ausfahren oder durchfahren können, und eine parallel neben dem Gleis 33 angeordnete Ent- und Beladestrecke 35. Die Ent- und Beladestrecke 35 hat rillenförmige Führungsbahnen 36, die quer zur Fahrtrichtung des Schienenfahrzeugs 1 verlaufen und in ihrer Anordnung und Form den Führungsbahnen 9 am Tragboden 2 entsprechen, so daß bei einem in die Umschlagstation 31 eingefahrenen Schienenfahrzeug 1 der Wechselboden 3 seitlich, quer zur Fahrtrichtung vom Schienenfahrzeug 1 auf die Ent- und Beladestrecke 35 und umgekehrt geschoben werden kann (Fig. 5, Fig. 9b bis 9c). Hierbei rollen die Rollen 8 des Wechselbodens 3 aus den Führungsbahnen 9 des Tragbodens 2 in die Führungsbahnen 36 der Umschlagstation 31. In gleicher Weise ist ein Querverschieben von den Führungsbahnen 36 der Umschlagstation 31 auf die Führungsbahnen 9 des Tragbodens 2 möglich. Durch das Verschieben in Querrichtung kann die Ladung eines Güterzugs in wenigen Sekunden entladen werden, ohne daß dazu aufwendige Portalkräne notwendig sind oder sich Probleme mit einer Oberleitung ergeben.

Zwischen den Führungsbahnen 36 der Umschlagstation 31 sind Zahnräder 37 zum Querverschieben der Wechselböden 3 so angeordnet, daß sie in die Zahnstangen 14 an der Unterseite 7 der Wechselböden 3 eingreifen können. Die Zahnräder 37 verlaufen mit ihren Achsen parallel zur Fahrtrichtung der Schienenfahrzeuge 1 und werden von einer Antriebseinheit (nicht dargestellt) in Drehung versetzt, so daß die Wechselböden 3 entlang den Führungsbahnen 36 verschoben werden.

Um die Schienenfahrzeuge 1 auf dem Gleis 33 bezüglich der Ent- und Beladestrecke 35 bzw. deren Führungsbahnen 36 richtig zu positionieren und zu arretieren, ist an der Umschlagstation 31 eine Arretiereinrichtung mit Schieber 38 vorgesehen, die seitlich auf Höhe des Tragbodens 2 von der Be- und Entladestrecke 35 in das Schienenfahrzeug 1 ausgefahren werden und seine Position auf dem Gleis 33 arretieren. Vorzugsweise erfolgt mittels der Schieber 38 die nötige Energieversorgung der Schienenfahrzeuge 1 mittels elektrischer, hydraulischer oder pneumatischer Leitungen für die Betätigung der Verriegelungseinrichtung mit den Greif- und Fixierelementen 16 und der Antriebseinheit für die Zahnräder 13 am Tragboden 2.

Vorzugsweise hat die Umschlagstation 31 neben der einen Ent- und Beladestrecke 35 mehrere Sortierstrecken 39, die parallel zu der Ent- und Beladestrecke 35 verlaufen. Die Sortierstrecken 31 weisen den gleichen Aufbau von Führungsbahnen 36 und Zahnrädern 37 wie die Ent- und Beladestrecke 35 auf, um die Wechselböden 3 quer zur Fahrtrichtung des Schienenfahrzeugs 1 zu verschieben.

Ferner sind die Führungsbahnen 36 der Umschlagstation 31 mit in Richtung parallel zur Fahrtrichtung der Schienenfahrzeuge 1 verlaufenden Spalten bzw. Lücken 40 angeordnet, in denen Tragbalken 41 quer zu den Führungsbahnen 36 bzw. parallel zur Fahrtrichtung der Schienenfahrzeuge 1 verschoben werden, um darüber angeordnete Wechselböden 3 mitzunehmen. Die Wechselböden 3 können somit auf der durch die Führungsbahnen 36 aufgespannten Fläche in Längs- und Querrichtung bewegt und damit sortiert werden, so daß diese Fläche einen Sortierbereich bildet. Der Sortierbereich ist in Querrichtung in den einzelnen Strecken 35, 39 (Ent- und Beladestrecke bzw. Sortierstrecken) und in Längsrichtung in Querverschiebebereiche 50 unterteilt, die jeweils einen Bereich in Längsrichtung begrenzen, innerhalb dessen ein Wechselboden 3 aufgenommen werden kann.

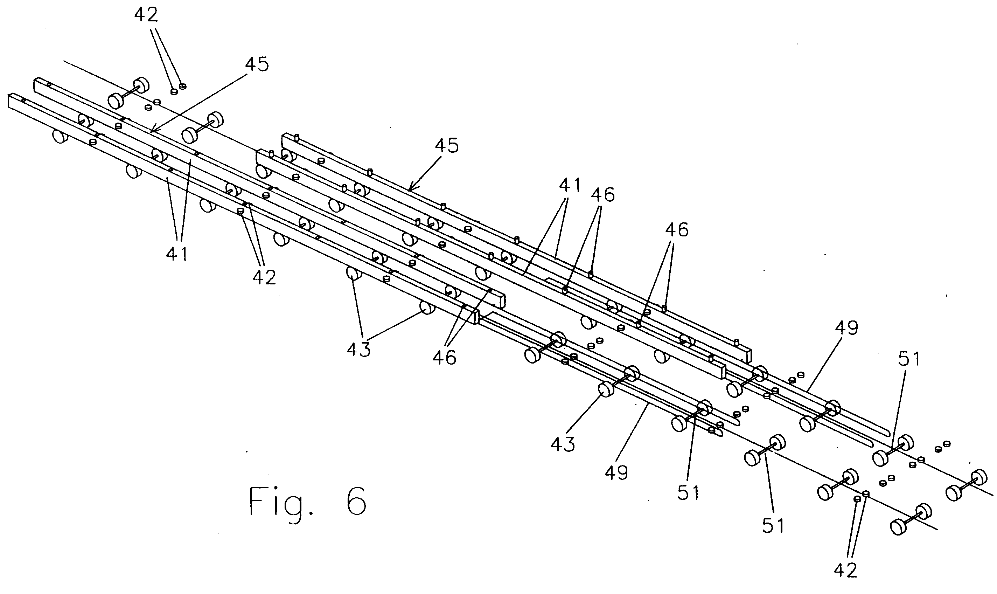

Die Tragbalken 41 sind entweder geschlossene rechteckige Hohlprofile oder haben einen nach oben hin offenen U-förmigen Querschnitt. Ihre Länge entspricht in etwa der Länge eines Wechselbodens 3. Die Tragbalken 41 werden durch seitlich angeordnete ortsfeste drehbare Führungsrollen 42 geführt und liegen auf Zahnrädern 43 mit einer an ihrer Unterseite befindlichen Zahnstange 44 auf, so daß durch eine Drehung der Zahnräder 43 die Tragbalken 41 in Längsrichtung befördert werden (Fig. 6, 8). Die Tragbalken 41 haben an ihrer Oberseite 45 eine Hubeinrichtung mit Hubzylinder 46 zum Anheben bzw. Hochdrücken von über dem Tragbalken 41 angeordneten Wechselböden 3, um sie aus den entsprechenden Führungsbahnen 36 zu heben (Fig. 8, 9k) und in Längsrichtung verschieben zu können. Die Hubzylinder 46 werden vorzugsweise elektrisch oder hydraulisch betrieben, wobei die entsprechende Engerie mit einer Hauptzuleitung 47, Nebenleitung 48, die in eine Schleppleitung 49 übergeht, zugeführt wird. Die Schleppleitung 49 begrenzt die Weglänge längs der die Tragbalken 41 verschoben werden können. Die maximale Weglänge kann auf die Länge des Wechselbodens 3 beschränkt sein.

Ein Wechselboden 3 wird zum Längsverschieben von zwei parallel zueinander angeordneten Tragbalken 41 angehoben, so daß die Rollen 8 des Wechselbodens 3 mit den Führungsbahnen 36 der Umschlagstation 31 nicht in Eingriff stehen. Durch das Verschieben der beiden Tragbalken 41 wird der darauf liegende Wechselboden 3 entlang einer Ent- und Belade- bzw. Sortierstrecke 35, 39 bewegt. Der Abstand zwischen zwei Tragbalken 41 entspricht in etwa dem Abstand zwischen den Schienen 34 eines Gleises 33.

Die zwei gemeinsam zu verschiebenden Tragbalken 41 liegen jeweils auf Zahnrädern 43 auf, die paarweise auf einer Welle 51 angeordnet sind (Fig. 8). Die Wellen 51 werden durch Lager 52 gehalten, die an etwa C-förmige Stahlträger 53 befestigt sind. Die C-förmigen Stahlträger haben eine Hauptwandung 54 mit einer oben und unten daran angebundenen, im Vergleich zur Hauptwandung 54 schmalen Boden- bzw. Deckenwandung 55a, 55b, die senkrecht von der Hauptwandung 54 abstehen. Die C-förmigen Stahlträger stehen auf der Bodenwandung 55a auf, wobei jeweils zwei C-förmige Stahlträger 53 einen sich parallel zur Fahrtrichtung erstreckenden Bereich bzw. Kanal begrenzen, in dem jeweils eine Reihe von Zahnrädern 43 für einen Tragbalken 41 angeordnet sind. Die C-förmigen Stahlträger 53 zeigen mit ihrer Boden- bzw. Deckenwandung 55a, 55b von den Zahnrädern 43 weg. Die Hauptwandungen 54 werden von den Wellen 51 an Durchgangslöchern durchgriffen, wobei etwas unterhalb der Durchgangslöcher senkrecht wegstehende in Richtung zu den Zahnrädern 43 zeigende Halteplatten zur Halterung der Lager 52 befestigt sind. Die Zahnräder 43 werden somit jeweils von zwei angrenzend an das jeweilige Zahnrad 43 angeordneten Lagern 52 gehalten, so daß eine Welle 51 für zwei Zahnräder 43 vier Lager 52 und vier C-förmige Stahlträger 53 durchgreift. An einem Ende der Welle 51 ist ein Antriebsrad 56 befestigt, das über eine Kette oder einen Riemen von einem Motor (nicht dargestellt) angetrieben wird. Hierbei sind jeweils die Wellen 51 eines Querverschiebebereichs 50, der sich über die Länge eines Wechselbodens 3 erstreckt, zusammengefaßt und werden durch einen einzigen Motor angetrieben.

Auf der Deckenwandung 55b des C-förmigen Stahlträgers 53 ist ein parallel zur Fahrtrichtung verlaufender Doppel-T-Träger 57 angebracht, an dem Halterungen 58 für Achsen 59 der Führungsrollen 42 befestigt sind. Die Achsen 59 stehen vertikal, wobei die Führungsrollen 42 jeweils paarweise an den Tragbalken 41 seitlich anliegen. Die Führungsbahnen 36 liegen jeweils auf zwei Doppel-T-Träger 57 auf und überbrücken den dazwischen liegenden Bereich.

Vorzugsweise sind an der Umschlagstation 31 unter jeder Führungsbahn Führungsrollen 42 und/oder Zahnräder 43 vorgesehen. Zumindest sollten es sechs Paar Führungsrollen 42 entlang eines einzelnen Tragbalkens 41 sein.

Die auf den Doppel-T-Trägern 57 aufliegenden Führungsbahnen 36 weisen die Lücken bzw. Spalten 40 auf, die sich in dem Bereich zwischen den sich gegenüberliegenden Doppel-T-Trägern 57 erstrecken. Ein auf den Führungsbahnen 36 liegender Wechselboden 3 übergreift somit jeweils zwei Spalten 40, weshalb es zweckmäßig ist, den Wechselboden 3 an seiner Unterseite 7 mit vier Rollen 8 pro quer verlaufender Reihe auszustatten, so daß immer zwei Rollen 8 auf einer der Führungsbahnen 36 aufliegen.

Das Längsverschieben eines Wechselbodens erfolgt, indem ein Paar von Tragbalken 41 mit ihren Hubzylindern 46 einen Wechelboden 3 aus den Führungsbahnen 36 eines Querverschiebebereichs 50 anhebt, den Wechselboden 3 durch ihre eigene Längsbewegung mittels der Zahnräder 43 in einen anderen Querverschiebebereich 50 transportiert und dort durch Absenken der Hubzylinder 46 in die entsprechenden Führungsbahnen 36 absetzt. Mit abgesenktem Hubzylinder 46 können die Tragbalken unter dem Wechselboden 3 frei verfahren werden.

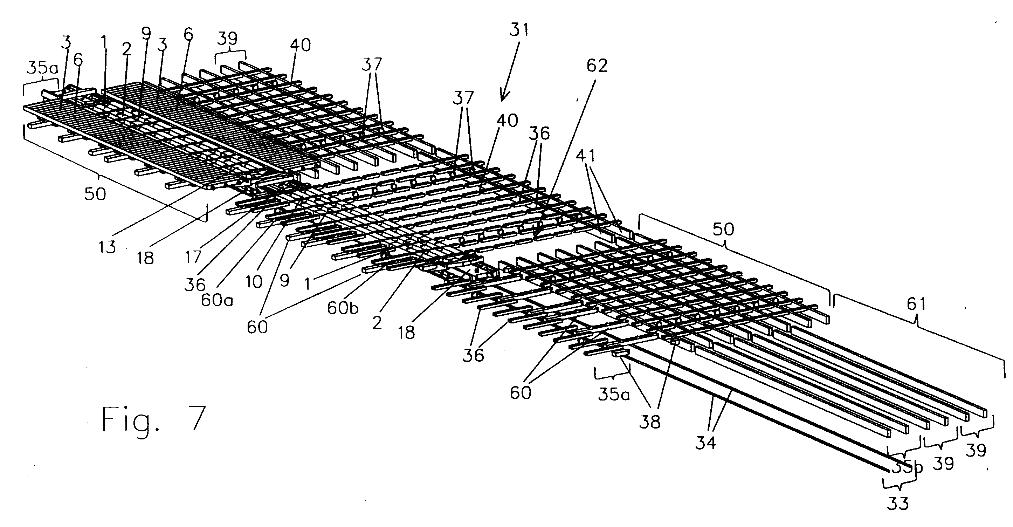

Die Ent- und Beladestrecke 35 besteht vorzugsweise aus einer Entladestrecke 35a und einer Beladestrecke 35b, die jeweils seitlich an das Gleis 33 angrenzen, so daß ein eingefahrenes Schienenfahrzeug 1 mit Tragboden 2 durch Querverschieben eines Wechselbodens 3 zur einen Seite hin auf die Entladestrecke 35a entladen wird und unmittelbar anschließend von der anderen Seite her eine auf der Beladestrecke 35b auf einem Wechselboden 3 vorbereitete Ladung auf das Schienenfahrzeug 1 geschoben wird (Fig. 7, Fig. 9b, 9c-9d). Zudem können mehrere Schienenfahrzeuge 1 eines Güterzugs gleichzeitig umgeschlagen werden, wodurch sehr kurze Standzeiten des Güterzugs in der Umschlagstation 31 erreicht werden, da die Verschiebevorgänge innerhalb weniger Sekunden ausgeführt werden.

Um die auf der Entladestrecke 35a abgestellten Wechselböden 3 auf die Beladestrecke 35b bzw. den Sortierstrecken 39 verschieben zu können, sind Gleisbrücken 60 (Fig. 7, 9a-9o) an der Entladestrecke 35a vorgesehen. Die Gleisbrücken 60 sind im Querschnitt U-förmige Schienen, die nach dem Ausfahren der Schienenfahrzeuge 1 aus der Umschlagstation 31 seitlich aus der Entladestrecke 35a ausgefahren werden (Fig. 9f-9g), so daß sie das Gleis 33 überbrücken und an der Seite der Beladestrecke 35 aufliegen. Die Gleisbrücken 60 sind mit nach oben vorstehenden Antriebsrädern 60a und Gleiträdern 60b versehen, wobei die Antriebsräder 60a durch eine Antriebseinheit (nicht dargestellt) angetrieben werden, um einen Wechselboden 3 von der Entladestrecke 35a auf die Beladestrecke 35b zu befördern (Fig. 9g-9h-9i). Nachdem die Wechselböden 3 von der Entladestrecke 35a auf die Beladestrecke 35b verschoben sind, werden die Gleisbrücken wieder in die Entladestrecke 35a eingefahren, um das Gleis 33 wieder für Schienenfahrzeuge 1 freizumachen. Neben der Beladestrecke 35b sind die Sortierstrecken 39 angeordnet, die zusammen mit der Belade- strecke 35b den Sortierbereich bilden, indem die Wechselböden sowohl in Längs- als auch in Querrichtung verschoben und sortiert werden (Fig. 9j-9n).

Die Entladestrecke 35a hat keine Einrichtung zum Längsverschieben der Wechselböden. Sie dient nur zum Entladen und kurzzeitigem Aufnehmen von Wechselböden, um die Standzeit der in die Umschlagstation eingefahrenen Schienenfahrzeuge zu verringern.

Die Umschlagstation 31 kann grundsätzlich mit beliebig vielen Querverschiebebereichen 50 und damit für beliebig lange Güterzüge ausgebildet sein, wobei eine Länge von vierzig Querverschiebebereichen 50 und somit etwa 800 m zweckmäßig ist, um die üblichen Zuglängen be- und entladen zu können. Es kann auch zweckmäßig sein, einen langen Zug in zwei kürzeren Abschnitten beispielsweise von je 400 m umzuschlagen. Hierfür wäre es vorteilhaft, wenn sowohl zwei Entladestrecken 35a als auch zwei Beladestrecken 35b parallel nebeneinander verlaufend neben dem Gleis 33 vorgesehen sind, so daß der Zug nacheinander mit den beiden Zughälften umgeschlagen werden kann. Nach dem ersten Umschlagvorgang kann die Ladung sowohl auf der Ent- als auch auf den Beladestrecke nachrücken, so daß für die zweite Hälfte wieder eine freie Entladestrecke zur Verfügung steht und auf der am Gleis angrenzenden Beladestrecke Ladung zum Verschieben auf die Tragböden 2 bereitsteht. Der Umschlagvorgang würde sich daher nur um das Ent- und Verriegeln der Schienenfahrzeuge in der Umschlagstation verlängern bzw. verzögern.

An den Enden der Sortierstrecken 39 sind Ausweichbereiche 61 für die zu verfahrenen Tragbalken 41 vorgesehen (Fig. 5, 7). In die Ausweichbereiche 61 können jeweils ein Paar der Tragbalken 41 einer Sortierstrecke 39 verschoben werden, so daß sich ein oder zwei nicht mit Tragbalken 41 besetzte Fehlstellen 62 in der Sortierstrecke 39 bilden und somit ein Platz zum Verschieben der anderen Tragbalken 41 derselben Sortierstrecke 39 geschaffen wird. Statt der Ausweichbereiche 61 ist es auch möglich, entlang der Sortierstrecke 39 eine oder bei längeren Sortierstrecken 39 auch mehrere Fehlstellen 62 vorzusehen, um die Tragbalken 41 in geeigneter Weise verschieben zu können.

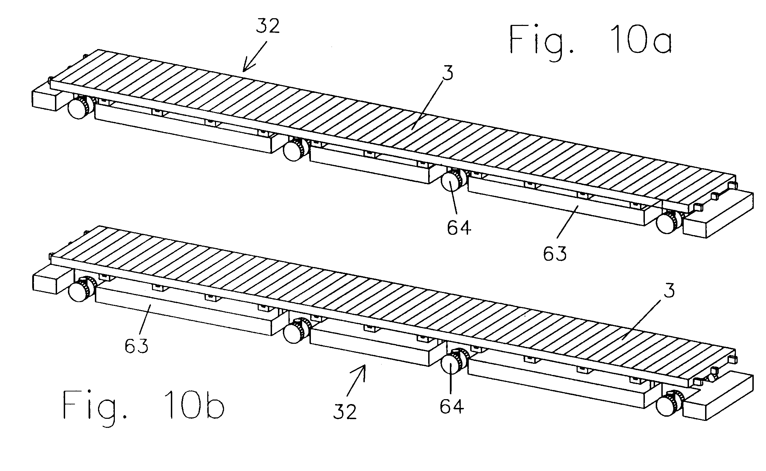

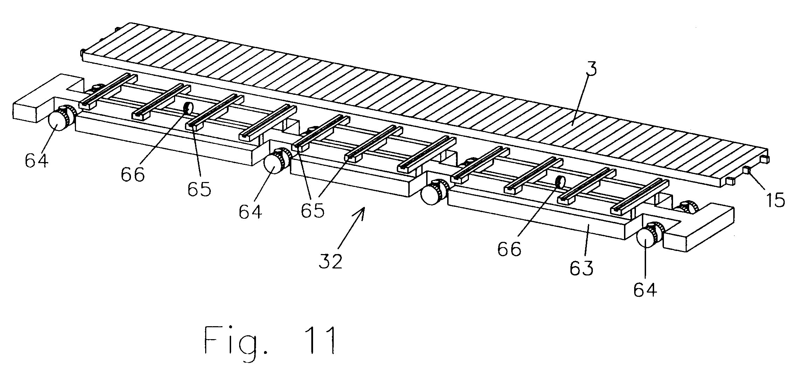

Für das Umschlagen von und auf das Schienenfahrzeug kann auch das Umschlaggerät 32 verwendet werden, das in den Fig. 10 bis 12 dargestellt ist.

Das Umschlaggerät 32 ist im Prinzip ein selbsttätig fahrbarer Tragboden mit höhenverstellbarer Auflagefläche für einen Wechselboden 3. Das Umschlaggerät 32 hat ein stabiles Chassis 63, worin die Antriebsmittel, wie Motor und Treibstofftank usw. untergebracht sind. Es steht auf mehreren Fahreinheiten 64 mit je zwei Rädern. Die Fahreinheiten 64 sind um 360° drehbar, so daß das Umschlaggerät jederzeit in eine beliebige Richtung verfahrbar ist. Die Fahreinheiten 64 sind in U-förmigen Ausschnitten am Chassis 63 derart untergebracht, daß sie nicht unter einem auf dem Umschlaggerät 32 aufliegenden Wechselboden 3 seitlich vorstehen. Das Umschlaggerät 32 hat zur Aufnahme eines Wechselbodens 3 eine Auflagefläche, die durch quer zur Längsrichtung des Umschlaggeräts 32 verlaufende Führungsbahnen 65 gebildet wird, die in der Höhe verstellbar sind. Ferner hat das Umschlaggerät 32 wie ein Tragboden 2 eine Antriebseinheit mit Zahnrädern 66 zum Querverschieben der Wechselböden 3, die in der Höhe zusammen mit den Führungsbahnen 65 verstellbar ist.

Das Umschlaggerät kann seitlich an ein Schienenfahrzeug 1 mit Tragboden 2 heranfahren und durch die Höhenverstellbarkeit seiner Führungsbahnen 65 an die Höhe der Führungsbahnen 9 des Tragbodens 2 angeglichen werden und durch Verschieben einen Wechselboden 3 übernehmen bzw. auf das Schienenfahrzeug oder auf ein anderes Transportfahrzeug mit einer entsprechenden Auflagefläche für Wechselböden 3 abschieben.

Dadurch, daß sich das Umschlaggerät 32 mit einem darauf befindlichen Wechselboden 3 auch auf eine relativ niedrige Höhe absenken kann, kann es unter einen auf Stützen 67 stehenden sogenannten Wechselbehälter 68 fahren und ihn auf den Wechselboden 3 durch Anheben desselben aufladen. Durch das Umschlaggerät 32 wird somit eine Kompatibilität zu der herkömmlichen Art von Transportbehältern gewährleistet, die, wenn sie einmal auf einen Wechselboden 3 aufgeladen sind, nur durch Querverschieben in das erfindungsgemäße Umschlagsystem integriert werden. Mit dem Umschlaggerät 32 können auch Lastkraftwagen, bei denen Auflageflächen für Wechselböden 3 in unterschiedlicher Höhe angeordnet sind, bedient werden, indem das Umschlaggerät 32 die Ladung von einem Lastkraftwagen aufnimmt, die Höhe durch Anheben oder Senken des Wechselbodens 3 ausgleicht und ihn durch Querverschieben auf einem anderen Lastkraftwagen oder auf ein anderes Transportfahrzeug, zum Beispiel ein Schienenfahrzeug, ablädt.

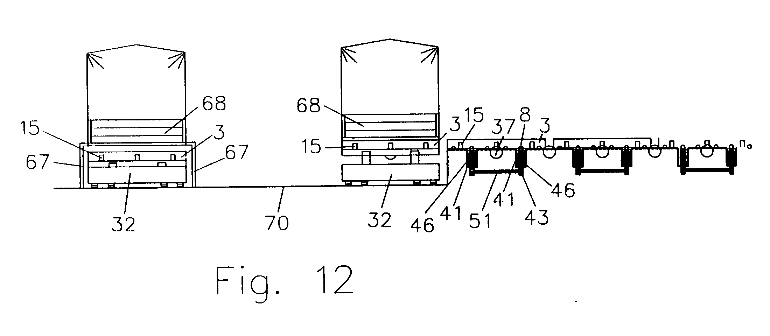

Ferner ermöglicht das Umschlaggerät 32, daß Transportfahrzeuge mit einem als Ladungsvermittler dienenden Wechselboden 3 auch an kleinen dezentralen Bahnhöfen an dem erfindungsgemäßen Umschlagsystem teilnehmen, da ein Schienenfahrzeug 1 auf einem Gleis 69 neben einem ebenen Anfahrbereich 70 für das Umschlaggerät 32 ent- und beladen werden kann, ohne daß dafür an der Umschlagstelle eine große Anlage notwendig ist (Fig. 12). Dies zeigt einen wesentlichen Vorteil des erfindungsgemäßen Umschlagverfahrens, da Umschlagstationen unterschiedlichster Kapazitäten und Größe am gemeinsamen Transportverkehr und insbesondere am gemeinsamen Schienentransportverkehr teilnehmen können, wobei die Stationen mehrere ent- und beladbare Transportwege, wie zum Beispiel Gleise oder Anfahrtstraßen für Lastkraftwagen, mit einer Vielzahl von Sortierstrecken umfassen können, oder in einer kleineren Ausführung nur ein Durchfahrtsgleis und ein Anfahrtsweg für Lastkraftwagen mit einer Be- und Entladestrecke bedienen, oder als Minihaltestelle nur mit einem oder mehreren Umschlaggeräten ausgestattet sind, um den Ent- und Beladevorgang auszuführen. Zudem kann die sogenannte "rollende Schiene" mit dem erfindungsgemäßen Umschlagsystem mit Wechselboden einfach durch eine Rampe realisiert werden, mit der die Lastkraftwagen bzw. Sattelschlepper auf einen Wechselboden auffahren und von dort auf ein mit einem Tragboden ausgerüstetes Schienenfahrzeug querverladen werden.

Wenn der Tragboden eines Schienenfahrzeugs und eine entsprechende Auflagefläche für einen Wechselboden an einem Lastkraftwagen gleich hoch sind, kann ein Wechselboden zwischen beiden auch ohne Umschlaggerät bzw. Umschlagstation direkt verschoben werden.

Weiterhin kann der erfindungsgemäße Wechselboden in vorteilhafter Weise in einem Hochregallager verwendet werden, wie es beispielsweise in WO 94/11599 beschrieben ist. Das darin offenbarte Hochregal ist mit mehreren Verschiebemodulen ausgebildet, die in der Art eines Gerüstes jeweils quaderförmig neben-, hinter- und aufeinander angeordnete Zellen begrenzen. In die Bodenbereiche der Verschiebemodule sind jeweils Antriebseinheiten zum Längs- und Querverschieben von Trägerplatten eingelassen, so daß ein im Hochregallager zu lagerndes Gut auf eine Trägerplatte geladen wird, und durch das entsprechende Verschieben der Trägerplatten in einem leeren Modul des Hochregallagers abgelegt wird. Ferner ist noch ein Aufzugsorgan vorgesehen, um die Trägerplatten zwischen den einzelnen Ebenen des Hochregallagers zu transportieren.

Der erfindungsgemäße Wechselboden kann in vorteilhafter Weise in diesem bekannten Hochregallager verwendet werden, da der Wechselboden so ausgebildet werden kann, daß er direkt als Trägerplatte im Hochregallager verwendet werden kann. Hierzu ist es zweckmäßig, den Wechselboden auf seiner Unterseite mit in Längsrichtung verlaufenden Zahnstangen zu versehen, die mit entsprechenden Zahnrädern der Antriebseinheiten der quaderförmigen Verschiebemodule zusammenwirken. Der erfindungsgemäße Wechselboden kann auch in dieses bekannte Hochregallager mittels sogenannter SPREADER integriert werden, wobei die SPREADER in den Verschiebemodulen verfahrbar sind und von oben mit dem Wechselboden 3 und dessen Ladung an den Längsseiten 4 aufgreifen und für den Transport gleichmäßig anheben. Ferner könnte mit dem darin angegebenen Aufzugssystem auch eine Umschlagstation mit in mehreren Ebenen angeordneten Sortierstrecken geschaffen werden.

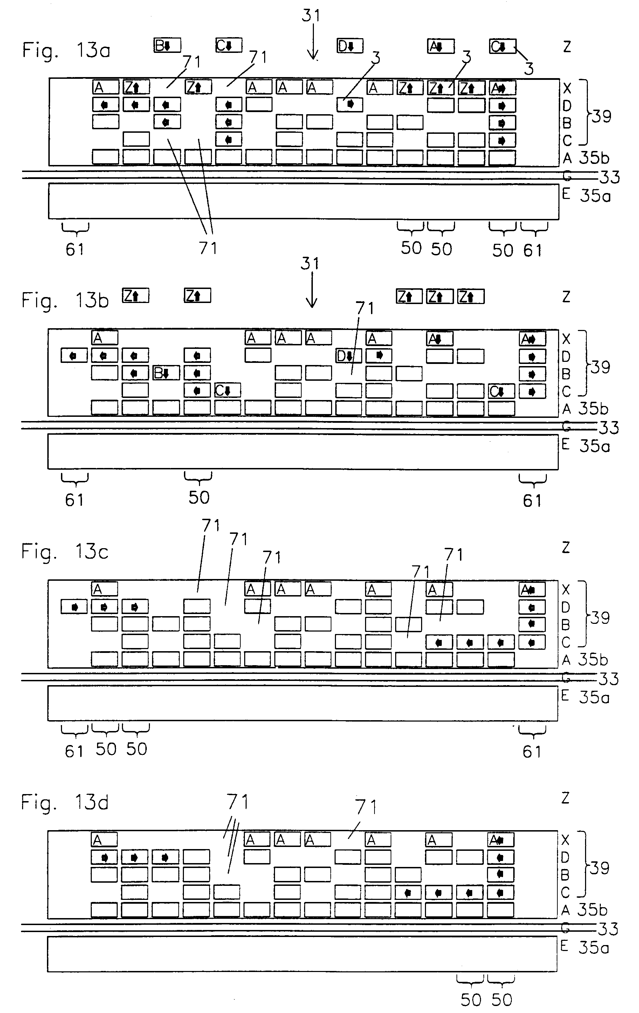

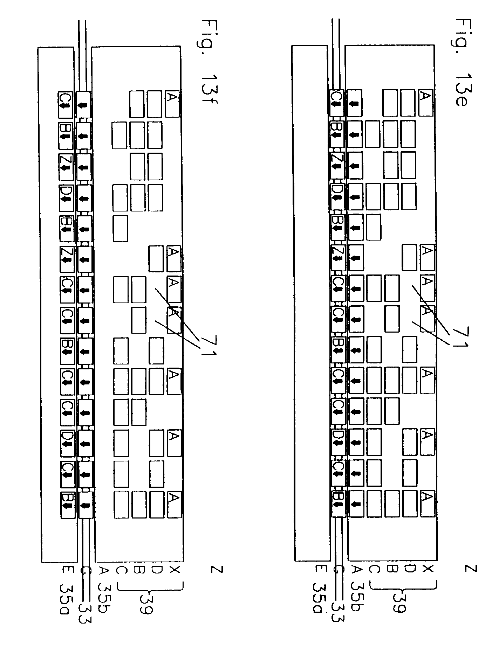

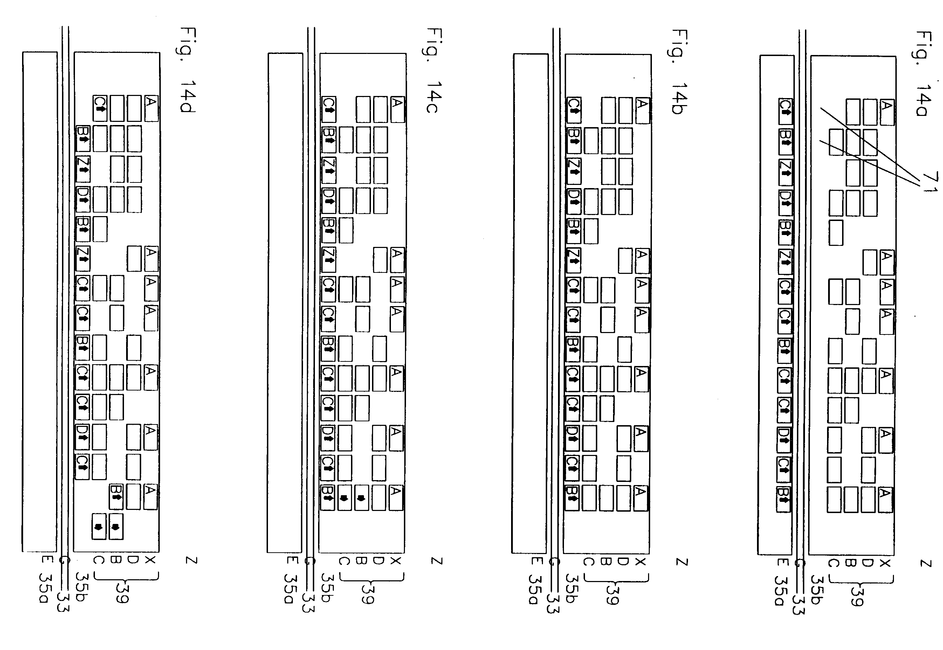

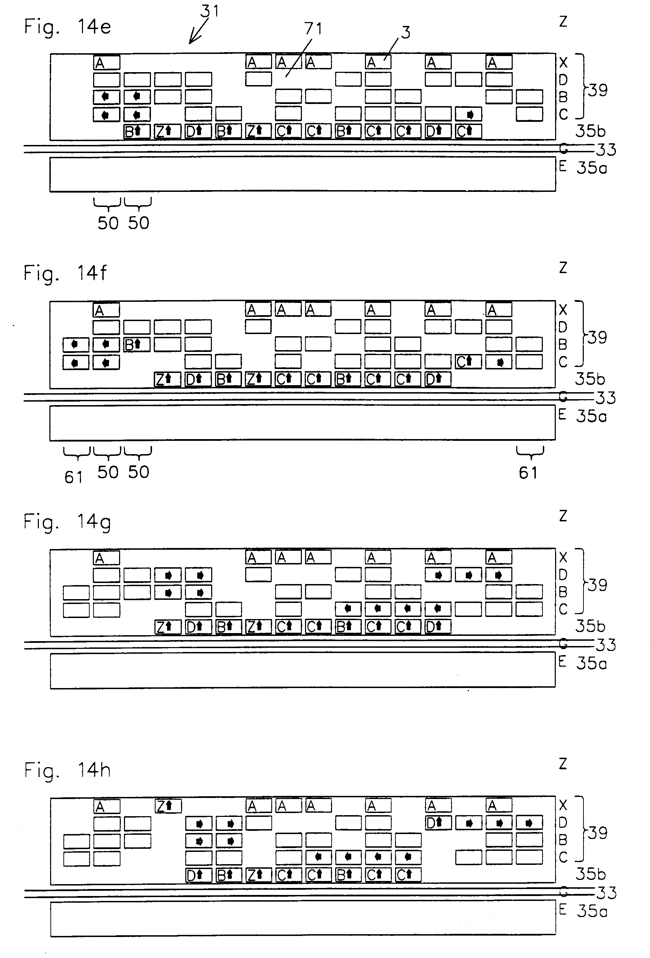

Der Betrieb einer ebenen Umschlagstation 31 wird nachfolgend näher anhand der Fig. 13a bis 13f und 14a bis 14y erläutert, in denen schematisch das Verschieben der Wechselböden 3 dargestellt ist.

Die dabei zugrundeliegende beispielhafte Umschlagstation 31 umfaßt ein Gleis 33, das eine Durchgangsstrecke für einen Güterzug bildet, wobei neben dem Gleis 33 jeweils eine Entladestrecke 35a und eine Beladestrecke 35b vorgesehen sind, an die sich vier weitere Sortierstrecken 39 anschließen. Diese beispielhafte Umschlagstation hat insgesamt vierzehn Querverschiebebereiche 50 zur seitlichen Aufnahme jeweils eines Wechselbodens 3. An den beiden Enden der Sortierstrecke 39 sind die Ausweichbereiche 61 angeordnet, in denen Wechselböden abgelegt werden können. Den Sortierstrecken 39 und der Beladestrecke 35b ist jeweils eine Richtung zugeordnet, die mit A, B, C, D und X gekennzeichnet ist, wobei die Sortierstrecke 39, die mit X gekennzeichnet ist, auch als Sammelstrecke zur Aufnahme von Wechselböden dient, die mit einem Lastkraftwagen angeliefert werden oder die momentan noch nicht bearbeitet werden können und hier zwischengelagert werden.

Die Wechselböden 3, die noch nicht in der für sie vorgesehenen Sortierstrecke 39 eingeordnet sind, sind mit dem entsprechenden Buchstaben A bis D bzw. X für die Richtung oder Z, d. h. zum Entladen auf Lastkraftwagen, gekennzeichnet.

Einzelne Wechselböden 3 mit entsprechenden Ladungen für die Richtungen A bis D, die mit Lastkraftwagen angeliefert werden, werden über die Sortierstrecke X in den Sortierbereich eingeschoben und dann durch entsprechende Längs- und Querverschiebungen in die für sie vorbestimmten Sortierstrecken 39 eingeordnet. Das Querverschieben der Wechselböden 3 erfolgt mit den oben dargelegten Antriebseinrichtungen, die die Wechselböden 3 entlang der Führungsbahnen 36 bewegen, wobei bei einem Verschiebevorgang ein Wechselboden 3 mehrere Sortierstrecken 39 kreuzen kann. Durch das Längsverschieben werden in den Sortierstrecken Freiplätze 71 freigemacht, durch die dann andere Wechselböden 3 querverschoben werden. Da aufgrund des Aufbau der Längsverschiebeeinrichtung mit den Tragbalken 41 die maximale Weglänge beim Längsverschieben durch die Schleppleitung 41 begrenzt ist, werden mehrere Wechselböden 3 vorzugsweise in einem Arbeitstakt gleichzeitig um einen Querverschiebebereich 50 verschoben, so daß die Freiplätze 71 schnell an beliebigen Stellen in den Sortierstrecken 27 erzeugt werden. Wenn eine Querverschiebung eines Wechselbodens 3 über mehrere Sortierstrecken 39 erfolgen soll, wird eine Gasse 72 durch mehrere nebeneinander angeordnete Freiplätze 71 an den Sortierstrecken 39 gebildet, so daß der Querverschiebevorgang auf einmal ausgeführt werden kann. Das Bilden der Gasse 72 benötigt nur einen einzige Arbeitstakt an der Umschlagstation, da die Wechselböden 3 in Längsrichtung gleichzeitig verschoben werden können. Eine derartige Gasse 72 ist beispielsweise in Fig. 14m-14n dargestellt, in der der Wechselboden Z von der Beladestrecke 35b zur Sortierstrecke X verschoben wird.

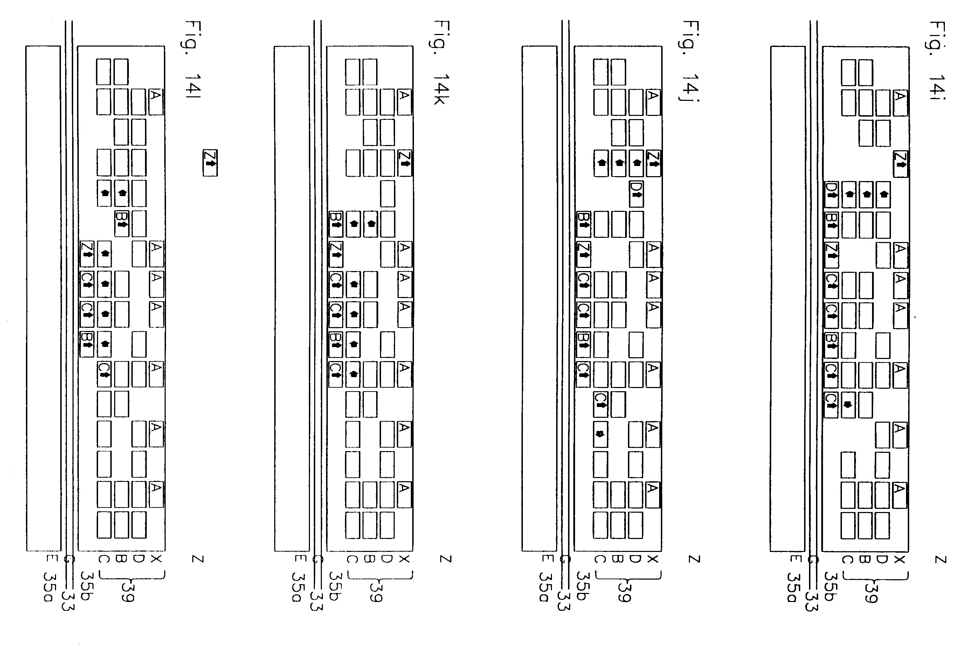

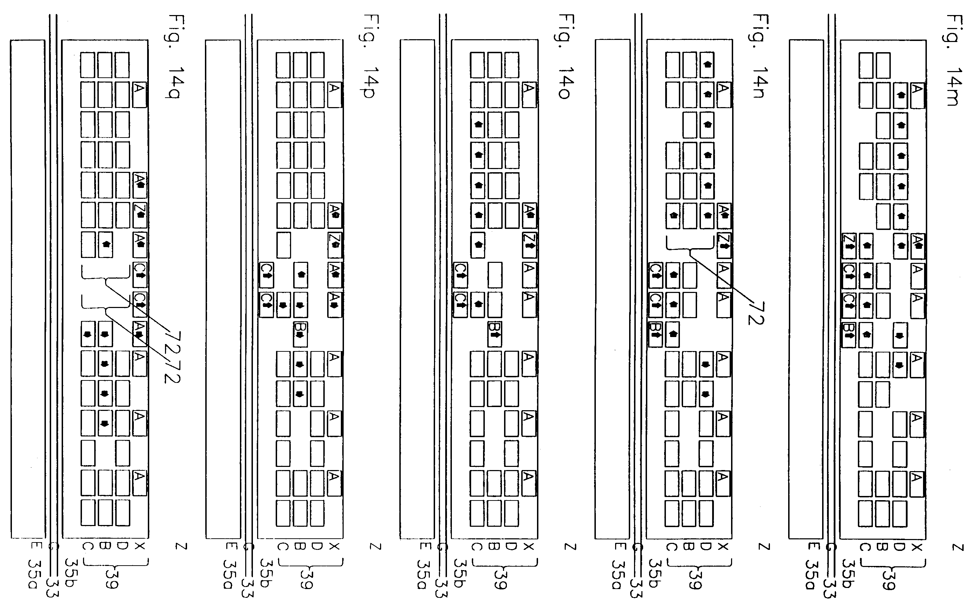

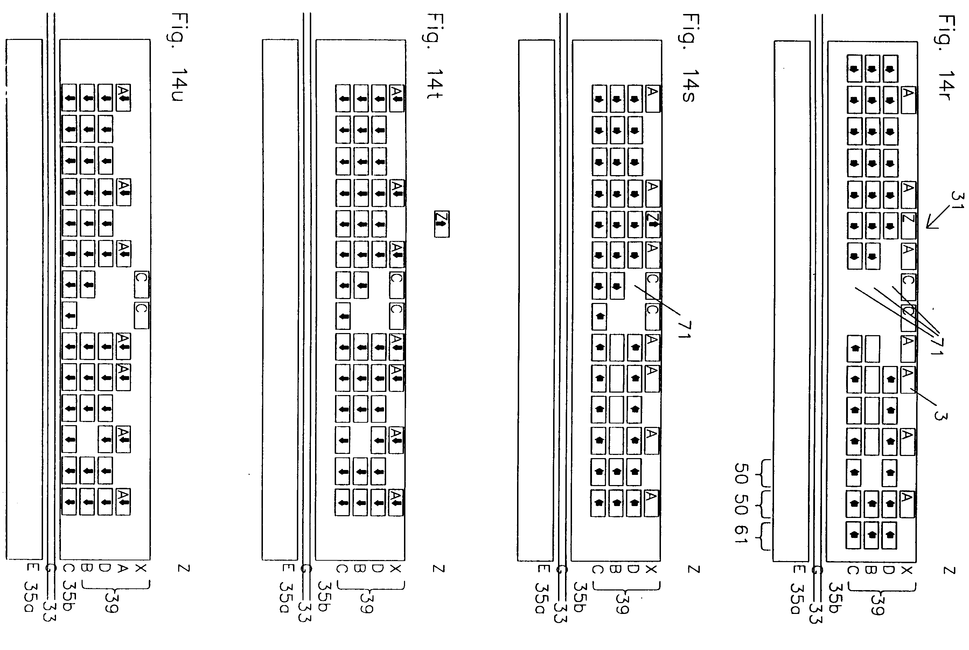

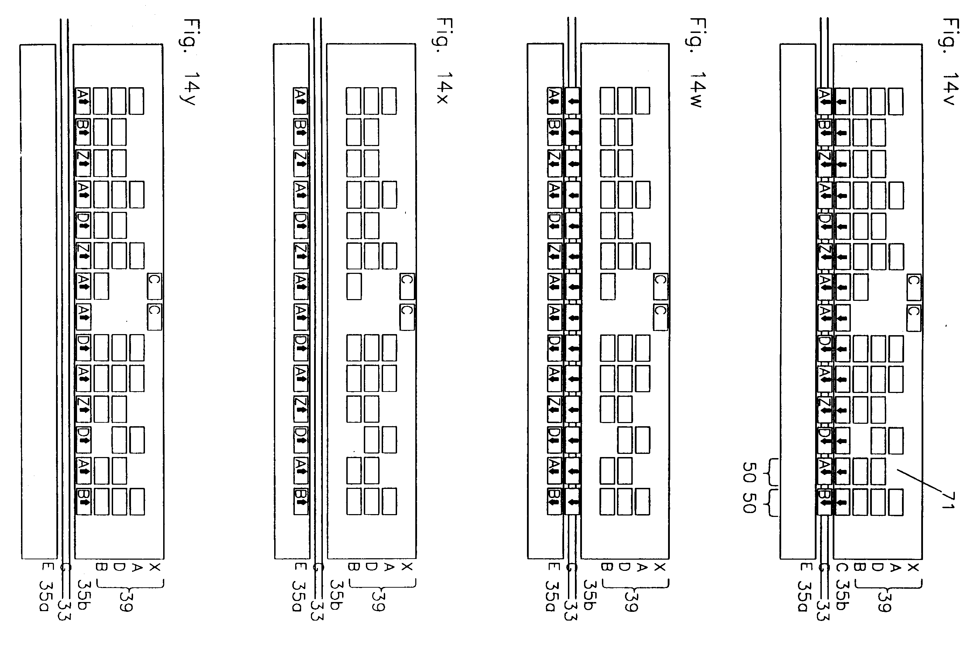

Die Sortierstrecken 39 bzw. die Beladestrecke 35b für die Ladung, die nach A soll, ist in Fig. 13a bereits vollständig mit Wechselböden ausgefüllt, so daß die weiteren Wechselböden, die Ladungen für A transportieren, in der Sortierstrecke, die mit X gekennzeichnet ist, zwischengelagert werden. Die übrigen Wechselböden 3 für die Richtungen B bis D werden durch Verschiebevorgänge in ihre jeweiligen Sortierstrecken 39 eingeordnet, wobei die schon in die richtigen Sortierstrecken eingeordneten Wechselböden (ohne Kennzeichnung) vorzugsweise nur in Längsrichtung verschoben werden, um den noch einzuordnenden Wechselböden den Weg freizumachen. Ein eingefahrener Güterzug mit Ladungen für die Richtungen B,C,D, bzw. Z (Fig. 13e) wird durch seitliches Abschieben der Wechselböden auf die Entladestrecke 35a entladen, wobei gleichzeitig die für die Richtung A bereitstehende Ladung durch Verschieben der entsprechenden Wechselböden von der Beladestrecke 35b auf den Güterzug erfolgt (Fig. 13f). Der mit der Ladung für die Richtung A beladene Güterzug kann aus der Umschlagstation ausfahren und der Sortiervorgang für die Richtungen B bis D beginnt von neuem (Fig. 15a bis u). Die auf der Entladestrecke 35a befindliche Ladung wird mittels Gleisbrücken 60 auf die Beladestrecke 35b verfahren (Fig. 14a, b). Mit dem Sortiervorgang werden nun die entsprechenden Wechselböden von der Beladestrecke 35b in die Sortierstrecken 39 durch die entsprechenden Verschiebevorgänge einsortiert, wobei die auf der Beladestrecke 35b befindlichen Wechselböden von den Enden der Umschlagstation in Richtung zur Mitte der Reihe nach eingeschoben werden. Hierbei kann aber auch eine andere Sortierstrategie angewandt werden, insbesondere, da der Sortiervorgang von Computern überwacht wird, können die einzelnen Wechselböden 3 in beliebiger Reihenfolge einsortiert und in beliebiger Reihenfolge in den vom Gleis 33 entfernten Sortierstrecken 39 abgelegt werden, wie es beispielsweise von Hochregallagern bekannt ist, in denen die einzelnen Güter auch in einer beliebigen Reihenfolge abgelegt werden. Wenn die Wechselböden in den Sortierstrecken für die Richtungen B bis D eingeordnet sind (Fig. 14t), werden sie in Richtung zum Gleis 33 hin parallel verschoben, so daß wieder eine Sortierstrecke für die Richtung A frei ist (Fig. 14u). Der Be- und Entladevorgang (Fig. 14v bis y) erfolgt wieder durch Querverschieben und Verschieben der entladenen Wechselböden mittels Gleisbrücken 60 von der Entladestrecke 35a auf die Beladestrecke 35b. Der weitere Sortiervorgang läuft dann wieder nach dem oben dargelegten Sortierprinzip ab, das in den Fig. 14a bis u dargestellt ist.

Für das Umschlagen zwischen Lastkraftwagen ist es zweckmäßig, Wechselböden 3 nicht nur bezüglich der Strecken 35b, 39 zu sortieren, sondern auch bezüglich der Querverschiebestrecke 50, an die die einzelnen Lastkraftwagen heranfahren. Hierbei werden Gassen von nebeneinanderliegenden Freiplätzen 71 entlang einer Strecke 35b, 39 gebildet, in denen die Wechselböden parallel zum Gleis 33 in Fahrtrichtung verschoben werden.

Anhand folgender Tabelle ist für drei unterschiedliche Zuglängen 800 m, 600 m und 400 m der Be- und Entladevorgang und das Sortieren der Ladung im zeitlichen Ablauf beispielhaft aufgeführt. Die Ent- und Beladezeit einschließlich des Sortierens beträgt für die drei Zuglängen etwa zwischen acht und fünfzehn Minuten, was zeigt, wie schnell und wirtschaftlich mit einer solchen relativ einfach aufgebauten Umschlagstation gearbeitet werden kann. Hierbei ist zu berücksichtigen, daß die einzelnen Verschiebegeschwindigkeiten erhöht werden können, womit sich die Gesamtzeit weiter verringert. Zudem ist die Umschlagzeit etwa proportional zur Zuglänge, so daß auch an kleineren Umschlagstationen ein langer Zug in mehreren Unterabschnitten wirtschaftlich umgeschlagen werden kann, beispielsweise ein Zug mit 60 Waggons in Unterabschnitten à 20 Waggons.

### Ablaufplan:

| *Zuglänge Waggons* | *40* | *30* | *20* |
|---|---|---|---|
| | *ca. 800 m* | *600 m* | *400 m* |
| *(Einfahren des Zuges)** | *(60 Sek.)* | *(45 Sek.)* | *(30 Sek.)* |
| *(Verriegeln der Waggons)** | *(10 Sek.)* | *(10 Sek.)* | *(10 Sek.)* |
| *Entladen:* | *30 Sek.* | *30 Sek.* | *30 Sek.* |
| *Beladen:* | *30 Sek.* | *30 Sek.* | *30 Sek.* |
| *Waggons entriegeln:* | *10 Sek.* | *10 Sek.* | *10 Sek.* |
| *Ausfahren des Zuges:* | *60 Sek.* | *45 Sek.* | *30 Sek.* |
| *Gleisbrücken schließen:* | *10 Sek.* | *10 Sek.* | *10 Sek.* |
| *Entladene Wechselböden auf Sortieranlage schieben:* | *40 Sek.* | *40 Sek.* | *40 Sek.* |
| *(Öffnen der Gleisbrücken)** | *(10 Sek.)* | *(10 Sek.)* | *(10 Sek.)* |
| *Sortiervorgang (Verschieben)* | *10x19,5 Sek.* | *15x19,5 Sek.* | *10x19,5 Sek.* |
| *Wechselböden längs verschieben (Verschiebegeschwindigkeit; 1 m/Sek.)* | *390 Sek.* | *290 Sek.* | *190 Sek.* |

| *Querverschieben:* | | | |
|---|---|---|---|
| *gerechnet:* | | | |
| *Wechselböden werden nacheinander jweils über die gesamte Breite (3 Sortierstrecken + 1 Beladestrecke) geschoben. Verschiebegeschwindigkeit:* | | | |
| *ca. 0,5 m/Sek.* | *310 Sek.* | *230 Sek.* | *150 Sek.* |
| *Bereitstellen der für den nächsten Zug sortierten Ladung* | *20 Sek.* | *20 Sek.* | *20 Sek.* |
| *Zeit bis zum Beladen des nächsten Zuges* | *900 Sek.* | *705 Sek.* | *500 Sek.* |
| | *15′* | *11′ 45˝* | *8′ 20˝* |
| *max. Umschlag / Tag (schienenseitig)* | *11.520 TEU* | *11.029 TEU* | *10.368 TEU* |
| *1 Wechselboden = 3 TEU (20' Container)* | | | |

Ein wesentlicher Vorteil der erfindungsgemäßen Umschlagstation liegt darin, daß sie mit relativ wenig Platzbedarf bei hoher Umschlagleistung in einer Ebene angeordnet ist, so daß sie einfach überdacht werden kann, womit selbst in Ballungsgebieten der Betrieb einer solchen Umschlagstation möglich ist, ohne daß die Umgebung übermäßig durch Lärm gestört wird.

Der erfindungsgemäße Wechselboden 3 ist nicht auf eine Ausführung mit einem ebenflächigen Ladedeck 5 beschränkt, sondern kann auch Aufbauten tragen, die einen Behälter zur Aufnahme von Schüttgut, Gasen oder Flüssigkeiten bilden. Vorzugsweise ist das Ladedeck 5 mit Twistlock-Verschlüssen ausgestattet, die mit Corner-Castings standardisierter ISO-Container an den Ecken der Container eine feste Verbindung eingehen. Der Wechselboden 3 bzw. sein Ladedeck 5 können auch mit diversen Ösen und Laschen zum Verankern von Sattelaufliegern, Lastkraftwagen, losem Transportgut wie Kisten etc. bzw. zum seitlichen Einstecken von Rungen zum Transport von Langgut versehen sein.

Der erfindungsgemäße Wechselboden kann eine Verbindung mit unterschiedlichen Transportfahrzeugen, wie Schienenfahrzeugen, Lastkraftwagen oder Schiffen, verwendet werden, wobei die Art des Umschlagens vom Fahrzeugtyp unabhängig ist und durch Querverladen erfolgt, so daß ein einheitliches und schnelles Umladen von Schiene auf Schiene, Schiene auf Straße, Schiene auf Schiff und umgekehrt möglich ist. Das Umschlagen mit dem erfindungsgemäßen Wechselboden ist auch unabhängig von der Spurbreite der Schienenfahrzeuge, so daß auch ein problemloser Umschlag zwischen Schienensystemen mit unterschiedlicher Spurbreite, wie z. B. zu dem der ehemaligen UDSSR mit einer Spurbreite von 1,52 m, möglich ist. Die Wechselböden 3 haben vorbestimmte Längen, damit die Kompatibilität zwischen den einzelnen Transportfahrzeugen, die mit einer geeigneten Auflagefläche für einen Wechselboden ausgerüstet sind, gewährleistet ist. Vorzugsweise sind die Wechselböden in einzelne Wechselbödenmodule trennbar, so daß ein Wechselboden mit einer Länge von 18 m in zwei Teile à 6 m und à 12 m unterteilt werden kann. Die Wechselbodenmodule werden beispielweise einzeln auf Lastkraftwagen transportiert, wohingegen der zusammengesetzte Wechselboden mit einer Gesamtlänge von 18 m für den Transport auf einem Schienenfahrzeug zweckmäßig ist. Geeignete Längenabmessungen sind die üblichen ISO-Einheiten à 6 m, 12 m und 18 m.

Die Erfindung ist auch nicht auf die Ausführungsform des Wechselbodens mit an seiner Unterseite angeordneten Rollen begrenzt, sondern statt der Rollen können auch Gleitkufen an der Unterseite 7 des Wechselbodens 3 als Verschiebelemente vorgesehen sein, die in die rillenförmigen Führungsbahnen 9 eingreifen. Es ist auch möglich, die Führungsbahnen 9 als überstehende Schienen mit einem vorbestimmten Profil auszubilden, das in entsprechenden Nuten an der Unterseite 7 des Wechselbodens 3 eingreift.

Die Zahnräder 13, 37 und 43 können auch Reibräder sein, die anstatt mit einer Zahnstange mit entsprechenden Reibflächen zusammenwirken, um die Wechselböden 3 in Querrichtung zu verschieben.

Im Gegensatz zu den bisher bekannten Transport- und Umschlagsystemen beruht das erfindungsgemäße Verfahren zum Umschlagen von Ladung auf der Idee, daß das Schienenfahrzeug bzw. Transportfahrzeug selbst verändert wird, wobei der verschiebbare Wechselboden 3 auf den Tragboden 2 aufliegt, so daß sich der Ent- und Beladevorgang auf einfaches seitliches Verschieben der Ladung reduziert und der erfindungsgemäße Wechselboden 3 zu jeder beliebigen Art von Ladung kompatibel ist, und so keine große Umstellung bei Containern, Wechselbehältern oder Sattelschleppern notwendig ist, die als Einheit auf den Wechselboden aufgestellt werden können.

Zudem ist es möglich, einen auf eine Umschlagstation durch Querverschieben abgeschobenen Wechselboden und die darauf befindliche Ladung mit herkömmlichen Umschlaggeräten weiter zu bedienen, so daß die Kompatibilität zu den herkömmlichlichen Umschlagverfahren hergestellt ist, und dennoch die Vorteile des erfindungsgemäßen Umschlagverfahrens des schnellen Umschlagens an einem Güterzug erzielt werden.

## Patentansprüche

1. Verfahren zum Umschlagen von Ladungen zwischen Schiene-Schiene und/oder Schiene-Straße und/oder Straße-Straße und/oder Schiene-Schiff, wobei zwischen einem Transportfahrzeug (1) und einer Be- bzw. Entladestation durch Querverschieben quer zur Fahrtrichtung des Transportfahrzeugs ent- bzw. beladen wird, indem ein auf dem Transportfahrzeug (1) querverschiebbar gelagertes plattenförmiges Tragelement (3) verwendet wird, das Betandteil des Transportfahrzeugs ist und zwischen dem Transportfahrzeug und der Be- bzw. Entladestation querverschoben wird,
**dadurch gekennzeichnet,**
daß das Tragelement ein Wechselboden (3) ist, der als Ladungsvermittler zwischen Schiene-Schiene und/oder Schiene-Straße und/oder Straße-Straße und/oder Schiene-Schiff verwendet wird, und daß die Be- und Entladestation in Form einer Umschlagstation (31) verwendet wird, die in Querrichtung bezüglich der Transportfahrzeuglängsachse in mehrere Querverschiebestationen bzw. Sortierstrecken (39) und in Längsrichtung in mehrere Querverschiebebereiche (50) unterteilt ist, wobei die Wechselböden (3) in Quer- und Längsrichtung in einer durch das Querverschieben festgelegten Ebene durch Verschieben sortiert werden.

2. Verfahren nach Anspruch 1,
dadurch **gekennzeichnet,**
daß das Transport- bzw. Schienenfahrzeug durch Querverschieben eines Wechselbodens auf einer Seite des Fahrzeugs entladen wird, und daß es anschließend durch Querverschieben eines weiteren Wechselbodens von der anderen Seite des Schienenfahrzeugs beladen wird.

3. Verfahren nach Anspruch 2,
dadurch **gekennzeichnet,**
daß an jeder Querverschiebestation zumindest ein Freiplatz vorgesehen wird und daß durch Querverschieben eines oder mehrerer Wechselböden in einem Querverschiebebereich eine Gasse durch die Freiplätze geschaffen wird, in der ein Wechselboden über mehrere Querverschiebestationen hinweg in Querrichtung verschoben wird.

4. Verfahren nach Anspruch 3,
dadurch **gekennzeichnet,**
daß Freiplätze durch Verschieben von Wechselböden in Ausweichbereiche außerhalb der Querverschiebebereiche geschaffen werden.

5. Verfahren nach einem oder mehreren der Ansprüche 1 bis 4,
dadurch **gekennzeichnet,**
daß in jeden Querverschiebebereich zumindest ein Freiplatz vorgehalten wird, und daß durch Verschieben parallel zur Fahrtrichtung eines oder mehrerer Wechselböden in einer Querverschiebestation eine Gasse durch die Freiplätze geschaffen wird, in der ein Wechselboden über mehrere Querverschiebebereiche hinweg parallel zur Fahrtrichtung verschoben werden kann.

6. Vorrichtung zum Umschlagen von Ladung zwischen Schiene-Schiene, Schiene-Straße und Schiene-Schiff zur Durchführung des Verfahrens nach einem der Ansprüche 1 bis 5 mit einem Tragelement (3) das auf einem Schienenfahrzeug (1) querverschiebbar lagert, wobei an seiner Unterseite (7) zum Querverschieben Führungselemente vorgesehen sind, die mit Gegenführungselementen am Schienenfahrzeug und gleichartigen Gegenführungselementen an einer Ent- und Beladestrecke (35) zusammenwirken, so daß das Tragelement (3) quer zur Fahrtrichtung des Schienefahrzeuges (1) zwischen dem Schienenfahrzeug (1) und der Ent- und Beladestrecke (35) querverschiebbar ist,
**dadurch gekennzeichnet,**
daß das Tragelement ein Wechselboden (3) ist, der als Ladungsvermittler zum Umschlagen zwischen Schiene-Schiene, Schiene-Straße und Schiene-Schiff dient und die Ent- und Beladestreecke (35) Betandteil einer Umschlagstation (31) ist, mit einer oder mehreren parallel zur Ent- und Beladestrecke (35) verlaufenden Sortierstrecken (39), die jeweils Gegenführungselemente aufweisen, so daß die Wechselböden (3) zwischen der Ent- und Beladestrecke (35) auf die Sortierstrecken (39) querverschoben werden können, wobei zumindest eine oder mehrere der Strecken (35, 39) eine Längsverschiebeeinrichtung zum Längsverschieben der Wechselböden (3) parallel zur Fahrtrichtung des Schienenfahrzeuges (1) hat/haben.

7. Vorrichtung nach Anspruch 6,
dadurch **gekennzeichnet,**
daß das Scheinenfahrzeug (1) einen Tragboden (2) hat, an dessen Oberseite (10) als Gegenführungselemente, quer zur Fahrtrichtung verlaufende Führungsbahnen (9) angeordnet sind.

8. Vorrichtung nach Anspruch 7,
dadurch **gekennzeichnet,**
daß der Tragboden (2) mit einer Antriebseinheit ausgerüstet ist, mit der der Wechselboden (3) quer zur Fahrtrichtung des Schienenfahrzeugs verschiebbar ist.

9. Vorrichtung nach Anspruch 7 oder 8,
dadurch **gekennzeichnet,**
daß am Tragboden (2) eine Verriegelungsvorrichtung vorgesehen ist, mit der der Wechselboden (3) mit dem Tragboden (4) verriegelt werden kann.

10. Vorrichtung nach Anspruch 9,
dadurch **gekennzeichnet,**
daß an Stirnkanten (5) des Wechselbodens (3) Verriegelungszapfen (15) angeordnet sind, die von entsprechenden am Tragboden (2) vorgesehenen Greif- und Fixierelementen (16) lösbar gehalten werden.

11. Vorrichtung nach einem der Ansprüche 7 bis 10,
dadurch **gekennzeichnet,**
daß die Führungbahnen (9) am Tragboden (2) in Querrichtung verlaufende Rillen und die korrespondierenden Führungselemente an den Wechselböden (3) in den Rillen laufende Rollen (8) sind.

12. Vorrichtung nach Anspruch 8 oder Anspruch 8 und einem der Ansprüche 9 bis 11,
dadurch **gekennzeichnet,**
daß die Antriebseinheit zum Verschieben des Wechselbodens (3) ein am Tragboden (2) angeordnetes Verschieberad umfaßt, das mit der Unterseite (7) des Wechselbodens (3) zusammenwirkt.

13. Vorrichtung nach Anspruch 12,
dadurch **gekennzeichnet,**
daß das am Tragboden (2) vorgesehene Verschieberad ein Zahnrad (13) ist, das mit seiner Achse in Fahrtrichtung angeordnet ist und mit einer an der Unterseite (7) des Wechselbodens (3) befindlichen Zahnstange (14) zusammenwirkt.

14. Vorrichtung nach Anspruch 12 oder 13,
dadurch **gekennzeichnet,**
daß zwei oder mehrere Verschieberäder am Tragboden (2) vorgesehen sind.

15. Vorrichtung nach einem der Ansprüche 6 bis 14,
dadurch **gekennzeichnet,**
daß der Wechselboden (3) ein rechteckiges, plattenförmiges Element ist.

16. Vorrichtung nach einem der Ansprüche 6 bis 15,
dadurch **gekennzeichnet,**
daß der Tragboden (2) eine aus Längsstreben (11) und Querstreben (12) bestehende Stahlkonstruktion ist.

17. Vorrichtung nach einem der Ansprüche 6 bis 16,
dadurch **gekennzeichnet,**
daß der Tragboden (2) an seinen Endbereichen mit je einer Aufhängeeinrichtung (17) zum Aufhängen auf ein Schienenfahrwerk (18) versehen ist.

18. Vorrichtung nach Anspruch 17,
dadurch **gekennzeichnet,**
daß die Aufhängeeinrichtungen (17) des Tragbodens (2) jeweils ein Loch (24) haben, mit dem sie einen Drehzapfen (25) eines Schienenfahrwerks (18) übergreifen.

19. Vorrichtung nach Anspruch 18,
dadurch **gekennzeichnet,**
daß die Schienenfahrwerke (18) seitlich verlaufende Leisten (28) haben, so daß eine am Schienenfahrwerk eingehängte Aufhängeinrichtung (17) mit einem quer zur Fahrtrichtung angeordneten Querbalken (23) auf den Leisten (28) aufliegt und der Tragboden (2) gegen ein Kippen abgestützt wird.

20. Vorrichtung nach einem der Ansprüche 6 bis 19,
dadurch **gekennzeichnet,**
daß der Wechselboden (3) einen Spezialaufbau, beispielsweise für den Transport von Schüttgut, Flüssigkeiten oder Gasen aufweist.

21. Vorrichtung nach einem der Ansprüche 6 bis 20,
dadurch **gekennzeichnet,**
daß die Umschlagstation (31) seitlich an einem Gleis (33) angrenzend angeordnet ist, die Ent- und Beladestrecke (35) und die Sortierstrecken (39) parallel zum Gleis (33) verlaufen, und an den Strecken (35, 39) Führungsbahnen (36) zur Aufnahme eines Wechselbodens (3) vorgesehen sind.

22. Vorrichtung nach Anspruch 21,
dadurch **gekennzeichnet,**
daß an der Ent- und Beladestrecke (35) bzw. an den Sortierstrecken (39) im Bereich zwischen von Führungsbahnen (36) eine oder mehrere Antriebseinheiten zum Querverschieben der Wechselböden (3) vorgesehen sind.

23. Vorrichtung nach Anspruch 22,
dadurch **gekennzeichnet,**
daß die Antriebseinheit ein Verschieberad umfaßt, das mit der Unterseite (7) eines Wechselbodens (3) zusammenwirkt und insbesondere ein Zahnrad (37) ist, das mit einer an der Unterseite (7) des Wechselbodens (3) befindlichen Zahnstange (14) zusammenwirkt.

24. Vorrichtung nach einem der Ansprüche 21 bis 23,
dadurch **gekennzeichnet,**
daß die Führungsbahnen (9) der Schienenfahrzeuge (1) und die Führungsbahnen (36) der Ent- und Beladestrecke (35) auf der gleichen Höhe angeordnet sind.

25. Vorrichtung nach einem der Ansprüche 21 bis 24,
dadurch **gekennzeichnet,**
daß eine Arretiereinrichtung vorgesehen ist, die ein auf dem Gleis (33) eingefahrenes Schienenfahrzeug (1) in einer Stellung arretiert, in der die Führungsbahnen (9) des entsprechenden Schienenfahrzeugs (1) mit den Führungsbahnen (36) der Ent- und Beladestrecke (35) in Flucht sind.

26. Vorrichtung nach Anspruch 25,
dadurch **gekennzeichnet,**
daß die Arretiereinrichtung seitlich von der Ent- und Beladestrecke (35) ausfahrbare Schieber (38) umfaßt, die die Schienenfahrzeuge (1) in der entsprechenden Stellung arretieren, wobei die Schieber (38) elektrische, hydraulische oder pneumatische Versorgungsleitungen zum Zuführen von Antriebsenergie beispielsweise für die Antriebseinheiten oder die Verriegelungseinrichtung am Schienenfahrzeug (1) umfassen.

27. Vorrichtung nach einem der Ansprüche 21 bis 26,
dadurch **gekennzeichnet,**
daß auf einer Seite des Gleises (33) eine dazu parallel verlaufende Entladestrecke (35a) und auf der gegenüberliegenden Seite des Gleises (33) eine Beladestrecke (35b) vorgesehen sind, die jeweils mit quer zum Gleis (33) verlaufenden Führungsbahnen (36) zur Aufnahme eines Wechselbodens (3) durch Querverschieben versehen sind, wobei eine oder mehrere über das Gleis (33) verfahrbare Gleisbrücken (60) zum Verbinden der Entladestrecke (35a) und die Beladestrecke (35b) vorgesehen sind, um einen Wechselboden (3) von der Entladestrecke (35a) zur Beladestrecke (35b) zu befördern.

28. Vorrichtung nach einem der Ansprüche 6 bis 27,
dadurch **gekennzeichnet,**
daß die Längsverschiebeeinrichtung durch Führungrollen (42) geführte Tragbalken (41) umfaßt, die mit einer Hubeinrichtung zum Anheben der Wechselböden (3) aus den Führungsbahnen (36) versehen sind, um die angehobenen Wechselböden (3) in Längsrichtung verfahren zu können.

29. Vorrichtung nach Anspruch 28,
dadurch **gekennzeichnet,**
daß jeweils zwei parallel zueinander verlaufende Tragbalken (41) für einen Wechselboden (3) vorgesehen sind.

30. Vorrichtung nach Anspruch 28 oder 29,
dadurch **gekennzeichnet,**
daß die Tragbalken (41) auf Antriebsrädern aufliegen, die die Tragbalken (41) in Längsrichtung antreiben, insbesondere sind die Antriebsräder Zahnräder (43), die mit einer an der Unterseite der Tragbalken (41) vorgesehenen Zahnstange (44) in Eingriff stehen.

31. Vorrichtung nach einem der Ansprüche 28 bis 30,
dadurch **gekennzeichnet,**
daß paarweise seitlich an den Tragbalken (41) angreifende Führungsrollen (42) vorgesehen sind, die die Tragbalken (41) in Längsrichtung parallel zum Gleis (33) führen.

32. Vorrichtung nach Anspruch 28 bis 31,
dadurch **gekennzeichnet,**
daß die Hubeinrichtung zum Anheben der Wechselböden (3) mehrere elektrisch oder hydraulisch angetriebene Hubzylinder (46) umfaßt.

33. Vorrichtung nach einem der Ansprüche 6 bis 21,
dadurch **gekennzeichnet,**
daß als Entladestation ein Umschlaggerät (32) vorgesehen ist, das mehrere quer zu seiner Längsrichtung verlaufende Führungsbahnen (65) hat, die in einer Ebene angeordnet und höhenverstellbar sind, um einen Wechselboden (3) durch Querverschieben aufnehmen bzw. abgeben zu können.

34. Vorrichtung nach Anspruch 33,
dadurch **gekennzeichnet,**
daß das Umschlaggerät (32) eine Antriebseinheit zum Querverschieben eines Wechselbodens (3) umfaßt.

35. Vorrichtung nach Anspruch 33 oder 34,
dadurch **gekennzeichnet,**
daß das Umschlaggerät (32) selbsttätig fahrbar ist.

36. Vorrichtung nach einem der Ansprüche 6 bis 20,
dadurch **gekennzeichnet,**
daß als Entladestation ein weiteres Transportfahrzeug, wie zum Beispiel ein Lastkraftwagen vorgesehen ist, der quer zu seiner Längsrichtung verlaufende Führungsbahnen hat, um einen Wechselboden (3) durch Querverschieben aufnehmen bzw. abgeben zu können.

## Claims

1. Process for the transfer of freight between railway and railway vehicles and/or railway and road vehicles and/or road and road vehicles and/or railway vehicles and ships, such that unloading or loading takes place between a transport vehicle (1) and a loading or unloading station by sideways displacement transversely to the driving direction of the said transport vehicle, in that a platform-like load-bearing element (3) mounted on the transport vehicle such that it can be moved sideways is used, the said platform being part of the said transport vehicle and being displaced sideways between the transport vehicle and the loading or unloading station,
**characterized in that**
the load-bearing element is an interchangeable body platform (3) used as a means of transferring loads between railway and railway vehicles and/or railway and road vehicles and/or road and road vehicles and/or railway vehicles and ships, and that the loading or unloading station is used in the form of a transfer station (31) which is divided in the transverse direction relative to the longitudinal axis of the transport vehicle into several sideways displacement stations or sorting tracks (39) and in the longitudinal direction into several sideways displacement segments (50), such that the interchangeable body platforms (3) are sorted in the transverse and longitudinal direction by displacement in a plane determined by their transverse movement.

2. Process according to Claim 1,
**characterized in that**
the transport or railway vehicle is unloaded by sideways movement of an interchangeable body platform on one side of the vehicle, and subsequently loaded by sideways movement of another interchangeable body platform on the other side of the railway vehicle.

3. Process according to Claim 2,
**characterized in that**
at each transverse displacement station at least one free space is provided and, by sideways movement of one or more interchangeable body platforms in a transverse displacement segment, an alley is created by the free space into which an interchangeable body platform can be pushed sideways via several transverse displacement stations.

4. Process according to Claim 3,
**characterized in that**
free spaces can be created by moving the interchangeable body platforms into outlying areas outside the transverse displacement segments.

5. Process according to any of Claims 1 to 4,
**characterized in that**
in each transverse displacement segment at least one space is kept free, and an alley is created by these free spaces by moving one or more of the interchangeable body platforms in a transverse displacement station parallel to the driving direction, in which a body platform can be moved parallel to the driving direction via several transverse displacement segments.

6. Equipment for the transfer of freight between railway and railway vehicles and/or railway and road vehicles and/or road and road vehicles and/or railway vehicles and ships, designed to carry out the process according to any of Claims 1 to 5 with a load-bearing element (3) mounted on a railway vehicle (1) so that it can be moved sideways, such that on its underside (7) guiding elements are provided for the sideways movement, which co-operate with corresponding guiding elements on the railway vehicle and similar corresponding guiding elements on an unloading or loading track (35), so that the load-bearing element (3) can be moved sideways transversely to the driving direction of the railway vehicle (1) between the railway vehicle (1) and the unloading and loading track (35),
**characterized in that**
the load-bearing element is an interchangeable body platform (3) that serves as a means of transferring loads between railway and railway vehicles, railway and road vehicles and railway vehicles and ships, and the unloading and loading track (35) is part of a transfer station (31) with one or more sorting tracks (39) parallel to the unloading and loading track (35), each of which has corresponding guiding elements so that the body platforms (3) can be moved sideways between the unloading and loading tracks (35) and onto the sorting tracks (39), such that at least one or more of the tracks (35, 39) has/have a device for displacing the body platforms (3) longitudinally, parallel to the driving direction of the railway vehicle (1).

7. Equipment according to Claim 6,
**characterized in that**
the railway vehicle (1) has a load-bearing base (2) on whose upper side (10) guideways (9) extending transversely to the driving direction are arranged as corresponding guiding elements.

8. Equipment according to Claim 7,
**characterized in that**
the load-bearing base (2) is equipped with a drive unit, whereby the interchangeable body platform (3) can be moved transversely to the driving direction of the railway vehicle.

9. Equipment according to either of Claims 7 or 8,
**characterized in that**
a locking device is provided on the load-bearing base (2) whereby the interchangeable body platform (3) can be locked in place on the load-bearing base (4).

10. Equipment according to Claim 9,
**characterized in that**
locking pins (15) are arranged along the end edges (5) of the interchangeable body platform (3), which are held by, but can be released from corresponding gripping and fixing elements (16) provided on the load-bearing base (2).

11. Equipment according to any of Claims 7 to 10,
**characterized in that**
the guideways (9) on the load-bearing base (2) are transversely extending grooves and the corresponding guiding elements on the interchangeable body platforms (3) are rollers (8) which move in the said grooves.

12. Equipment according to Claim 8 or Claim 8 together with any of Claims 9 to 11,
**characterized in that**
the drive unit which displaces the interchangeable body platform (3) comprises a drive wheel arranged on the load-bearing bottom (2), which co-operates with the underside (7) of the body platform (3).

13. Equipment according to Claim 12,
**characterized in that**
the drive wheel provided on the load-bearing base (2) is a toothed wheel (13), positioned with its axis along the driving direction and engaging with a rack (14) on the underside (7) of the interchangeable body platform (3).

14. Equipment according to Claim 12 or Claim 13,
**characterized in that**
two or more drive wheels are provided on the load-bearing base (2).

15. Equipment according to any of Claims 6 to 14,
**characterized in that**
the interchangeable body platform (3) is a rectangular platform-shaped element.

16. Equipment according to any of Claims 6 to 15,
**characterized in that**
the load-bearing base (2) is a steel construction consisting of longitudinal struts (11) and transverse struts (12).

17. Equipment according to any of Claims 6 to 16,
**characterized in that**
the load-bearing base (2) is provided at each end with a suspension device (17) enabling it to be suspended on a railway chassis (18).

18. Equipment according to Claim 17,
**characterized in that**
the suspension devices (17) of the load-bearing base (2) have in each case a hole (24) with which they can grip a rotating pin (25) of a railway chassis (18).

19. Equipment according to Claim 18,
**characterized in that**
the railway chassis (18) have bars (28) extending sideways, so that a suspension device (17) hung on a railway chassis can be moved onto the bars (28) by a cross-beam transverse to the driving direction and the load-bearing base (2) will be supported against tilting.

20. Equipment according to any of Claims 6 to 19,
**characterized in that**
the interchangeable body platform (3) comprises a special superstructure, for example for the transport of bulk goods, fluids or gases.

21. Equipment according to any of Claims 6 to 20,
**characterized in that**
the transfer station (31) is positioned alongside a rail track (33), the unloading and loading track (35) and the sorting tracks (39) run parallel to the track (33), and guideways (36) are provided on the tracks (35, 39) to receive an interchangeable body platform (3).

22. Equipment according to Claim 21,
**characterized in that**
on the unloading and loading track (35) or on the sorting tracks (39), in the area between the guideways (36), one or more drive units are provided for the sideways displacement of the interchangeable body platforms (3).

23. Equipment according to Claim 22,
**characterized in that**
the drive unit comprises a drive wheel that co-operates with the underside (7) of a body platform (3), and that it is in particular a toothed wheel (37) which engages with a rack (14) on the underside (7) of the body platform (3).

24. Equipment according to any of Claims 21 to 23,
**characterized in that**
the guideways (9) on the railway vehicle (1) and the guideways (36) of the unloading and loading track (35) are positioned at the same height.

25. Equipment according to any of Claims 21 to 24,
**characterized in that**
a detent device is provided, which holds a railway vehicle (1) that has shunted onto the rail track (33) in a fixed position, in which the guideways (9) of the corresponding railway vehicle (1) are aligned with the guideways (36) of the unloading and loading track (35).

26. Equipment according to Claim 25,
**characterized in that**
the detent device comprises sliders (38) that can be pushed out sideways from the unloading and loading track (35), which hold the railway vehicle (1) in the correct position, the said sliders (38) comprising electric, hydraulic or pneumatic supply lines for the supply of drive power, for example for the drive units or the locking device on the railway vehicle (1).

27. Equipment according to any of Claims 21 to 25,
**characterized in that**
on one side of the rail track (33) there is an unloading track (35a) parallel to it and on the other side of the rail track (33) there is a loading track (35b) parallel to it, each of these being provided with guideways (36) transverse to the rail track (33) and designed to receive an interchangeable body platform (3) pushed sideways onto them, such that one or more rail bridges (60) that can move along the track (33) to connect the unloading track (35a) and the loading track (35b) are provided, so that a body platform (3) can be transferred from the unloading track (35a) to the loading track (35b).

28. Equipment according to any of Claims 6 to 27,
**characterized in that**
the longitudinal displacement device comprises support beams (41) guided by guide rolls (42), which are provided with a lifting device for lifting the interchangeable body platforms (3) clear of the guideways (36) so that the raised body platforms (3) can be moved in the longitudinal direction.

29. Equipment according to Claim 28,
**characterized in that**
in each case two mutually parallel support beams (41) are provided for each interchangeable body platform (3).

30. Equipment according to Claim 28 or Claim 29,
**characterized in that**
the support beams (41) rest on drive wheels which move the support beams (41) in the longitudinal direction, and in particular, the said drive wheels are toothed wheels (43) which engage with a rack (44) on the underside of the support beam (41).

31. Equipment according to any of Claims 28 to 30,
**characterized in that**
guide rolls (42) are provided in pairs at the sides of the support beams (41), which guide the support beams (41) in the longitudinal direction parallel to the rail track (33).

32. Equipment according to any of Claims 28 to 31,
**characterized in that**
the lifting device which raises the interchangeable body platforms (3) comprises several electrically or hydraulically powered lifting cylinders (46).

33. Equipment according to any of Claims 6 to 21,
**characterized in that**
a transfer device (32) is provided as an unloading station, which has several guideways (65) extending transversely to its longitudinal direction, the said guideways being arranged in one plane and being adjustable in height so that they can receive or give up an interchangeable body platform (3) moved sideways onto or off them.

34. Equipment according to Claim 33,
**characterized in that**
the transfer device (32) comprises a drive unit for the sideways movement of an interchangeable body platform (3).

35. Equipment according to Claims 33 or 34,
**characterized in that**
the transfer device (32) can move under its own power.

36. Equipment according to any of Claims 6 to 20,
**characterized in that**
another transport vehicle, for example a goods vehicle, is provided as the unloading station, and this said vehicle has guideways transverse to its longitudinal direction so that it can receive or give up an interchangeable body platform (3) moved sideways onto or off it.

## Revendications

1. Procédé de transbordement rail/rail et/ou rail/route, et/ou route/route, et/ou rail/bateau, de charges, le chargement ou déchargement étant effectué entre un véhicule de transport (1) et un poste de chargement ou de déchargement grâce à un déplacement transversal par rapport à la direction de circulation du véhicule de transport, et en utilisant un élément de support (3) en forme de plaque montée sur le véhicule de transport (1) pour pouvoir être déplacée transversalement, cet élément de support faisant partie du véhicule de transport, et étant déplacé transversalement entre le véhicule de transport et le poste de chargement ou de déchargement,
caractérisé en ce que l'élément de support est une base interchangeable (3) utilisée en tant que dispositif de transfert de charges rail/rail, et/ou rail/route, et/ou route/route, et/ou rail/bateau, et en ce que le poste de chargement et de déchargement est utilisé sous la forme d'un poste de transbordement (31) partagé dans la direction transversale par rapport à l'axe longitudinal du véhicule de transport, en plusieurs postes de déplacement transversal ou sections de triage (39), et dans la direction longitudinale, en plusieurs régions de déplacement transversal (50), les bases interchangeables (3) étant triées par déplacement dans la direction transversale et longitudinale, dans un plan déterminé par le déplacement transversal.

2. Procédé selon la revendication 1,
caractérisé en ce que le véhicule de transport ou véhicule sur rail, est déchargé par le déplacement transversal d'une des bases interchangeables depuis l'un des côtés du véhicule, et ensuite chargé de l'autre côté, grâce au déplacement transversal d'une autre base interchangeable.

3. Procédé selon la revendication 2,
caractérisé en ce que, à chaque poste de déplacement transversal, on a prévu au moins un emplacement libre, et que par un déplacement transversal d'au moins une base interchangeable dans une zone de déplacement transversal, on crée une voie à travers les emplacements libres, dans laquelle une base interchangeable est déplacée dans la direction transversale en passant par-dessus plusieurs postes de déplacement transversal.

4. Procédé selon la revendication 3,
caractérisé en ce que des emplacements libres sont crées par un déplacement de bases interchangeables vers des zones d'écartement situées à l'extérieur des zones de déplacement transversal.

5. Procédé selon l'une ou plusieurs des revendications 1 à 4,
caractérisé en ce que, dans chaque zone de déplacement transversal, au moins un emplacement libre est réservé, et que, par un déplacement parallélement à la direction de circulation d'au moins une base interchangeable dans un poste de déplacement transversal, on obtient une voie à travers les emplacements libres, dans laquelle une base interchangeable peut être déplacée parallélement à la direction de circulation en passant par-dessus plusieurs zones de déplacement transversal.

6. Dispositif de transbordement rail/rail, rail/route et bateau/bateau d'une charge, pour la mise en oeuvre du procédé selon l'une des revendications 1 à 5, comportant un élément de support (3) monté sur un véhicule sur rail (1), de manière à pouvoir être déplacé transversalement, des éléments de guidage étant prévus sur sa face inférieure (7) pour effectuer le déplacement transversal, ces éléments coopérant avec des éléments de guidage opposés du véhicule sur rail, et des éléments de guidage opposés analogues prévus sur un segment de chargement et de déchargement (35), de manière à ce que l'élément de support (3) puisse être déplacé transversalement à la direction de circulation du véhicule sur rail (1), entre ce dernier et le segment de déchargement et de chargement (35),
caractérisé en ce que l'élément de support est une base interchangeable (3) qui sert de dispositif de transfert de charges pour un transbordement rail/rail, rail/route et bateau/bateau, et en ce que le segment de déchargement et de chargement (35) fait partie d'un poste de transbordement (31) comprenant au moins une voie de triage (39) qui s'étend parallélement au segment de déchargement et de chargement (35), ces voies de triage présentant respectivement des éléments de guidage opposés, de manière à ce que les bases interchangeables (3) puissent être amenées sur les voies de triage (39) par un déplacement transversal entre le segment de déchargement et de chargement, au moins l'une des voies (35, 39) comportant un moyen de déplacement longitudinal pour le déplacement longitudinal des bases interchangeables (3) parallèlement à la direction de circulation du véhicule sur rail (1).

7. Dispositif selon la revendication 6,
caractérisé en ce que le véhicule sur rail (1) présente une base de support (2), sur la face supérieure (10) de laquelle des pistes de guidage (9) qui s'étendent transversalement à la direction de circulation sont prévues en tant qu'éléments de guidage opposés.

8. Dispositif selon la revendication 7,
caractérisé en ce que la base de support (2) est équipée d'une unité d'entraînement au moyen de laquelle il est possible de déplacer la base interchangeable (3) transversalement à la direction de circulation du véhicule sur rail.

9. Dispositif selon la revendication 7 ou 8,
caractérisé en ce qu'on a prévu sur la base de support (2) un moyen de verrouillage grâce auquel la base interchangeable (3) peut être verrouillée avec la base de support (2).

10. Dispositif selon la revendication 9,
caractérisé en ce que sur des bords frontaux (5) de la base interchangeable (3), on a prévu des chevilles de verrouillage (15) qui sont tenues par des éléments de saisie et de fixation correspondants (16) prévus sur la base de support (2).

11. Dispositif selon l'une des revendications 7 à 10,
caractérisé en ce que les pistes de guidage (9) de la base de support (2) sont des rainures qui s'étendent dans la direction transversale, et que les éléments de guidage correspondants prévus sur les bases interchangeables (3) sont des galets (8) qui se déplacent dans les rainures.

12. Dispositif selon la revendication 8, ou selon la revendication 8 et l'une des revendications 9 à 11,
caractérisé en ce que l'unité d'entraînement pour le déplacement de la base interchangeable (3) comprend une roue de déplacement disposée sur la base de support (2) qui coopère avec la face inférieure (7) de la base interchangeable (3).

13. Dispositif selon la revendication 12,
caractérisé en ce que la roue de déplacement prévue sur la base de support (2) est une roue dentée (13) dont l'axe est orienté dans la direction de circulation, et qui coopère avec une crémaillère (14) prévue sur la face inférieure (7) de la base interchangeable (3).

14. Dispositif selon la revendication 12 ou 13,
caractérisé en ce qu'au moins deux roues de déplacement sont prévues sur la base de support (2).

15. Dispositif selon l'une des revendications 6 à 14,
caractérisé en ce que la base interchangeable (3) est un élément rectangulaire en forme de plaque.

16. Dispositif selon l'une des revendications 6 à 15,
caractérisé en ce que la base de support (2) est une construction en acier comportant des entretoises longitudinales (11) et transversales (12).

17. Dispositif selon l'une des revendications 6 à 16,
caractérisé en ce que la base de support (2) comporte dans ses régions terminales respectivement un moyen de suspension (17) pour la suspendre sur un chariot sur rail (18).

18. Dispositif selon la revendication 17,
caractérisé en ce que les moyens de suspension (17) de la base de support (2) comportent respectivement un trou (24) par lequel ils chevauchent un tourillon (25) d'un chariot sur rail (18).

19. Dispositif selon la revendication 18,
caractérisé en ce que les chariots sur rail (18) présentent des nervures latérales (28), de manière à ce qu'un moyen de suspension (17) accroché au chariot repose sur la nervure (28) par une barre transversale (23) disposée transversalement à la direction de circulation, et que la base de support (2) soit supportée pour empêcher son basculement.

20. Dispositif selon l'une des revendications 6 à 19,
caractérisé en ce que la base interchangeable (3) présente un montage spécial, par exemple pour le transport de marchandises en vrac, de liquides ou de gaz.

21. Dispositif selon l'une des revendications 6 à 20,
caractérisé en ce que le poste de transbordement (31) est disposé au voisinage latéral d'un rail (33), que le segment de déchargement et de chargement (35), et les voies de triage (39) s'étendent parallèlement au rail (33), et que des pistes de guidage (36) sont prévues sur les segments (35, 39) pour accueillir une base interchangeable (3).

22. Dispositif selon la revendication 21,
caractérisé en ce qu'au moins une unité d'entraînement est prévue sur les segments de déchargement et de chargement (35), ainsi que sur les voies de triage (39), dans la région entre les pistes de guidage (36), pour le déplacement transversal des bases interchangeables (3).

23. Dispositif selon la revendication 22,
caractérisé en ce que l'unité d'entraînement comprend une roue de déplacement qui coopère avec la face inférieure (7) d'une base interchangeable (3), et qui est en particulier une roue dentée (37) qui coopère avec une crémaillère (14) prévue sur la face inférieure (7) de la base interchangeable (3).

24. Dispositif selon l'une des revendications 21 à 23,
caractérisé en ce que les pistes de guidage (9) des véhicules sur rail (1), et les pistes de guidge (36) du segment de déchargement et de chargement (35) sont agencées à la même hauteur.

25. Dispositif selon l'une des revendications 21 à 24,
caractérisé en ce qu'un moyen d'arrêt est prévu pour arrêter un véhicule sur rail (1) amené sur un rail (33), dans une position où les pistes de guidage (9) du véhicule sur rail (1) sont alignées avec les pistes de guidage (36) du segment de déchargement et de chargement (35).

26. Dispositif selon la revendication 25,
caractérisé en ce que le moyen d'arrêt comprend des coulisseaux (38) qui peuvent être sortis latéralement par rapport au segment de déchargement et de chargement (35), et qui arrêtent les véhicules sur rail (1) dans la position correspondante, les coulisseaux (38) comprenant des lignes d'alimentation électrique, hydraulique ou pneumatique pour l'alimentation en énergie d'entraînement, par exemple des unités d'entraînement ou des moyens d'arrêt du véhicule sur rail (1).

27. Dispositf selon l'une des revendications 21 à 26,
caractérisé en ce que, d'un côté du rail (33), on a prévu un segment de déchargement (35a) parallèle à celui-ci, et sur le côté opposé du rail (33), un segment de chargement (35b), ces segments étant respectivement munis de pistes de guidage (36) s'étendant transversalement au rail (33) pour accueillir une base interchangeable (3) déplacée transversalement, au moins un pont (60), déplaçable sur le rail (33), étant prévu pour relier le segment de déchargement (35a) et le segment de chargement (35b) en vue de transporter une base interchangeable (3) du segment de déchargement (35a) vers le segment de chargement (35b).

28. Dispositif selon l'une des revendications 6 à 27,
caractérisé en ce que le moyen de déplacement longitudinal comprend des barres de support (41) guidées par des galets (42), ces barres étant munies d'un moyen de levage pour soulever les bases interchangeables (3) des pistes de guidage (36) pour pouvoir déplacer les bases interchangeables (3) levées dans la direction longitudinale.

29. Dispositif selon la revendication 28,
caractérisé en ce que respectivement deux barres de support (41) parallèles entre elles sont prévues pour une base interchangeable (3).

30. Dispositif selon la revendication 28 ou 29,
caractérisé en ce que les barres de support (41) reposent sur des roues d'entraînement qui les entraînent dans la direction longitudinale, ces roues d'entraînement étant en particulier des roues dentées (43) qui s'engrènent avec une crémaillère (44) prévue sur la face inférieure de la barre de support (41).

31. Dispositif selon l'une des revendications 28 à 30,
caractérisé en ce qu'on a prévu des galets de guidage (42) dont respectivement deux sont en contact latéral avec les barres de support (41), ces galets guidant les barres de support (41) dans la direction longitudinale parallèlement au rail (33).

32. Dispositif selon les revendications 28 à 31,
caractérisé en ce que le moyen de levage pour soulever les bases interchangeables (3) comprend plusieurs cylindres de levage (46) entraînés électriquement ou hydrauliquement.

33. Dispositif selon l'une des revendications 6 à 21,
caractérisé en ce qu'un appareil de transbordement (32) a été prévu en tant que poste de déchargement, cet appareil présentant plusieurs pistes de guidage (65) s'étendant transversalement à sa direction longitudinale, disposées dans un même plan, et réglables en hauteur pour pouvoir accueillir ou libérer une base interchangeable (3) par déplacement transversal.

34. Dispositif selon la revendication 33,
caractérisé en ce que l'appareil de transbordement (32) comprend une unité d'entraînement pour le déplacement transversal d'une base interchangeable (3).

35. Dispositif selon la revendication 33 ou 34,
caractérisé en ce que l'appareil de transbordement (32) est automobile.

36. Dispositif selon l'une des revendications 6 à 20,
caractérisé en ce qu'un autre véhicule de transport, tel que par exemple un véhicule utilitaire, est prévu en tant que poste de déchargement, ce véhicule comportant des pistes de guidage s'étendant transversalement à sa direction longitudinale pour pouvoir accueillir ou libérer une base interchangeable (3) par déplacement transversal.
